# EUROPEAN PATENT APPLICATION

(11) **EP 1 770 617 A1**
(43) Date of publication of application: **04.04.2007**
(21) Application number: 06013770.0
(22) Date of filing: 22.09.1999
(51) Int. Cl.: G06Q 10/00

(54) **User-defined dynamic collaborative environments**

(30) Priority: 22.09.1998 US 101431 P; 21.09.1999 US 399753
(62) Divisional of application: 99949786.0
(71) Applicant: SCIENCE APPLICATIONS INTERNATIONAL CORPORATION, San Diego California 92121 (US)
(72) Inventor: Miller, Craig Science Appl. Internat. Corp., San Diego CA 92121 (US); Mangis Jeffrey K. Science Appl. Internat. Corp., San Diego CA 92121 (US); Lester Harold D. Science Appl. Internat. Corp., San Diego CA 92121 (US); Nicholas John M. Science Appl. Internat. Corp., San Diego CA 92121 (US); Wallo Andrew Science Appl. Internat. Corp., San Diego CA 92121 (US); Kress Thomas P. Science Appl. Internat. Corp., San Diego CA 92121 (US); Cheal Linda J. Science Appl. Internat. Corp., San Diego CA 92121 (US); Weatherbee James E. Jr. Science Appl. Intern. Corp, San Diego CA 92121 (US); Davies Linda M. Science Appl. Internat. Corp., San Diego CA 92121 (US)
(74) Representative: Benech, Frédéric

(57) **Abstract**

A collaborative system and method allows members of a group to collaborate on a project such as a bid or proposal. According to a first embodiment, a complex instrument trading engine (CITE) facilitates negotiation between two or more parties. A set of tools and techniques are provided in order to facilitate negotiation and execution of complex instruments such as contracts between corporations and governments. According to a second embodiment, referred to as a dynamic collaborative environment, a user can define a group and a virtual private network environment including user-selected tools that facilitate communication, research, analysis, and electronic transactions within the group. The environment can be destroyed easily when it is no longer needed. Multiple environments can co-exist on the same physical network of computers.

## Description

This application is related in subject matter to and claims priority from provisional U.S. application serial number 60/101,431, filed on September 22, 1998. The contents of that application are bodily incorporated herein.

### BACKGROUND OF THE INVENTION

### 1. Technical Field

This invention relates generally to computer systems and networks. More particularly, the invention relates to systems and methods for providing user-defined collaborative environments for transacting business or electronic commerce.

### 2. Related Information

Following hurricane Andrew, many insurance companies sought to limit their risk by withdrawing coverage from coastal areas. While this made good sense for the specific companies, it was not acceptable from a societal perspective. The cities, towns, homes and businesses built near the coasts could not afford to go without insurance, nor could the financial institutions that loaned money on these properties afford the risk. The problem facing the insurance companies was not the absolute magnitude of the risk, but the concentration of the risks in one area, leading to the possibility of very large losses resulting from a single event.

One law firm had conceived the idea of providing a mechanism for insurance companies to exchange risk. Companies with a high exposure in one area (e.g. Florida windstorms) could reduce their risk by ceding part of this to another company with non-coincident risk (e.g. California earthquakes) and assume part of the second company's risk in return. A company (CATEX) was formed to conduct such trading, but the trading rules had yet to be defined and the trading infrastructure had not yet been developed. CATEX postulated that the key barrier to insurance risk trading was determining the relative risk of different perils in different regions. One approach suggested by CATEX was to try to estimate these relative risks (termed relativities) for a broad set of perils and regions, to provide an initial basis for trading.

It was recognized, for various reasons, that this could not be done feasibly because: general estimates of risk, rather than the risk for specific locations, buildings, ships, etc. would be inadequate for commerce; there were many risks to evaluate given all of the permutations of location, perils, and structure; and companies would not be willing to trade risk based strictly on a third-party's analysis

An analysis of the problem, however, indicated that estimating the relativities was not essential to facilitate trading, or, in a broader sense, that trading was the only way to address the problem of insuring concentrated risk. The key difficulty was determining how to create greater efficiency in the reinsurance market, whether by introducing new instruments (like swaps), bringing new capital to the market, connecting more buyers to more traders, or reducing the cost of placing reinsurance. It was determined that the above concept could be implemented in an electronic trading system that could play an important role in promoting these factors, and could, in fact, transform the reinsurance market, which is not very automated. A system that allowed trading was developed and implemented. A more detailed description of this system, as enhanced in accordance with various inventive principles herein (referred to as "first-generation" complex instrument trading technology), are provided below. More generally, as electronic commerce (and business-to-business commerce, in particular) has grown, various companies have developed software tools and services to facilitate transactions on the Internet and over private networks. E-Bay, for example, hosts a well-known web site that operates a transaction model (a so-called "concurrent auction") that permits buyers to submit bids on items offered by individuals. Lotus Notes provides a network-oriented system that allows users within a company to collaborate on projects. Oracle Corporation hosts various transaction engines for clients that pay to host such services on a web site. DIGEX Corporation similarly hosts web-based application programs including various transaction engines. Other companies sell so-called "shrink wrap" software that allows individuals to set up web sites that provide catalog ordering facilities and the like.

Some Internet service providers, such as America Online, host "chat rooms" that permit members to hold private discussions with other members who enter various rooms associated with predetermined topics. A company known as blueonline.com hosts a web site that facilitates collaboration on construction projects. Various virtual private networks have been created to facilitate communication among computer users across the Internet and other networks, but these networks provided very limited functionality (e.g., e-mail services); are not user-defined (they must be created and installed by system administrators); and they cannot be easily destroyed when they are no longer needed.

The aforementioned products and services are generally not well suited to facilitating complex electronic transactions. As one example, most conventional services are predefined (not user-defined) and are centrally administered. Thus, for example, a group of companies desiring to collaborate on a project must fit their collaboration into one of the environment models provided by an existing service provider (or, alternatively, build a custom system at great expense).

Suppose, for example, that a group of high school students needs to collaborate on a research paper that requires soliciting volunteers for a survey on drug use, conducting the survey, brainstorming on the survey results, posing follow-up questions to survey participants anonymously, publishing a report summarizing the results, and advertising the report for sale to newspapers and radio stations. This project requires elements of communication among persons inside a defined group (those writing the paper) and outside the group (e.g., survey participants); conducting research (conducting the survey, compiling the results, comparing the results with other surveys published by news sources; and brainstorming on the meaning of the results); and conducting a commercial transaction (e.g., publishing the survey in electronic form and making it available at a price to those who might be interested in the results). No existing software product or service is available to meet the specific needs of this research team. Creating a user-defined environment including tools and communication facilities to perform such a task would be prohibitively expensive. Even if such a tailor-made environment could be created, it would be difficult to disassemble the environment (computers, networks, and software) after the project was completed.

In short, there is a need to provide a user-defined collaborative environment that is tailored to the needs of particular groups that conduct communication, research, electronic transactions, and deal-making.

### SUMMARY OF THE INVENTION

A first embodiment of the invention, referred to as a complex instrument trading engine (CITE), facilitates negotiation between two or more parties. In this embodiment, a set of negotiation tools and techniques such as anonymous email, secure communication, document retention, and bid and proposal listing services are provided in order to facilitate the negotiation and execution of complex instruments such as contracts between corporations, governments, and individuals.

A second embodiment of the invention, referred to as a dynamic collaborative environment (DCE), allows members of a group to define a dynamic virtual private network (DVPN) environment including user-selected tools that facilitate communication, research, analysis, and electronic transactions both within the group and outside the group. The environment can be destroyed easily when it is no longer needed. Multiple environments can co-exist on the same physical network of computers.

Although the two embodiments are described separately for ease of comprehension, it should be understood that the two embodiments share many features and, in fact, the second embodiment could include some or all of the features of the first embodiment in a generalized collaborative system. Consequently, references to a specific embodiment in the following description should not be deemed to limit the scope of features or tools included in each embodiment. Moreover, references to specific applications, such as the reinsurance industry, should not be deemed to limit the application of the invention to any particular field.

### BRIEF DESCRIPTION OF THE DRAWINGS

FIG. I A shows a four-step model of deal making including meeting, analysis, negotiation, and closing the deal.
FIG. 1B shows contract formation among a group of parties to a contract.
FIG. 2 shows a listing display system showing all offers for contracts and responses thereto.
FIG. 3 shows details of a listing that has been selected by a user.
FIG. 4 shows one possible implementation of a reply card definition screen.
FIG. 5 shows one possible implementation of a document management screen.
FIG. 6 shows one possible implementation of a screen indicating persons having access to a shared folder.
FIG. 7 shows a list of consummated deals in the system.
FIG. 8A shows detailed information regarding a completed trade.
FIG. 8B shows a deal summary including structured and unstructured information concerning the deal.
FIG. 9 shows a "flip widget" in a first state.
FIG. 10 shows a "flip widget" in a second state.

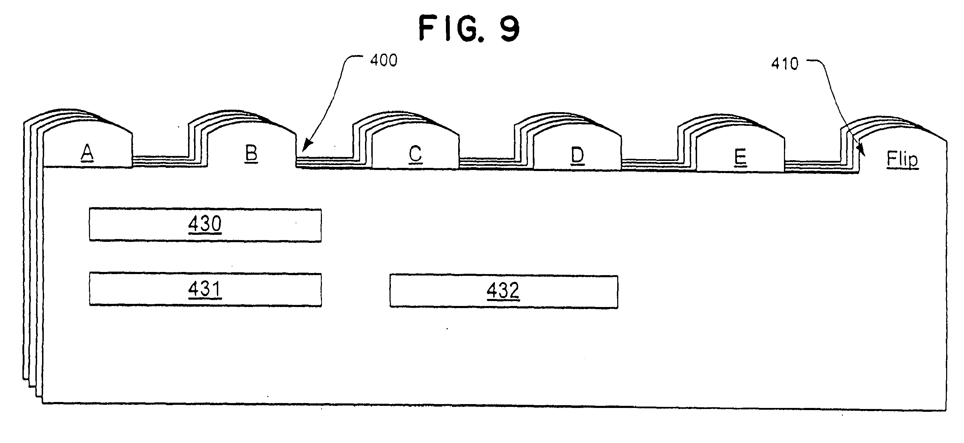

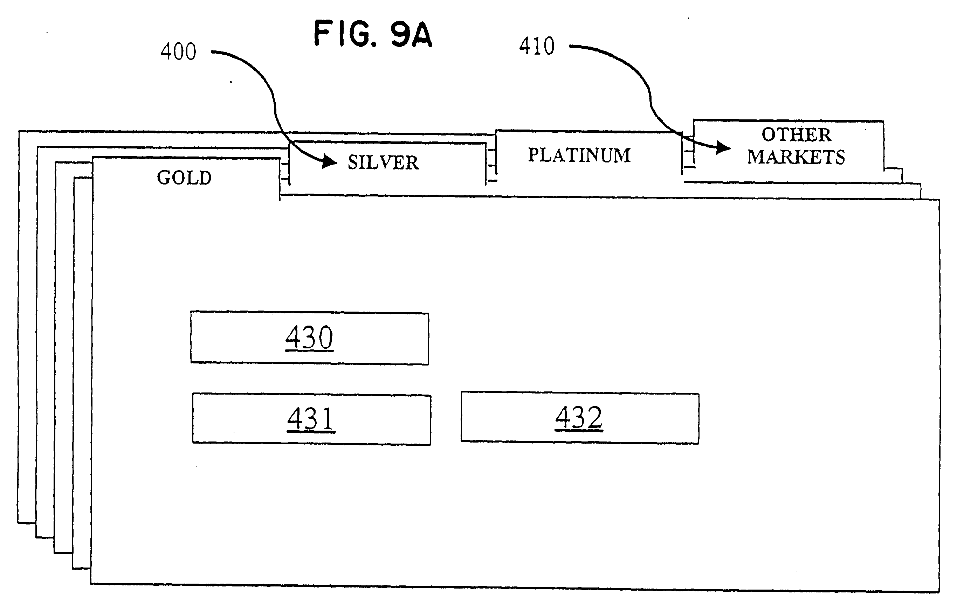

FIG. 9A shows a more detailed example of a "flip widget" in a first state.

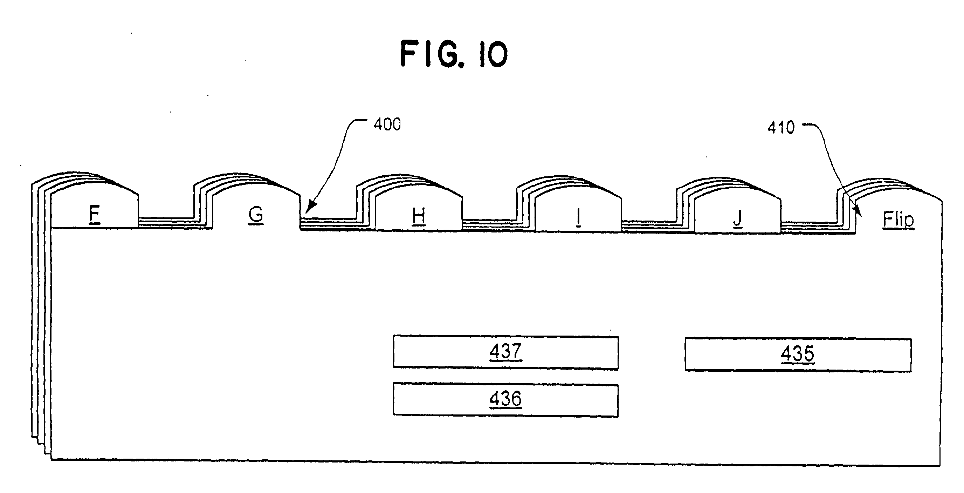

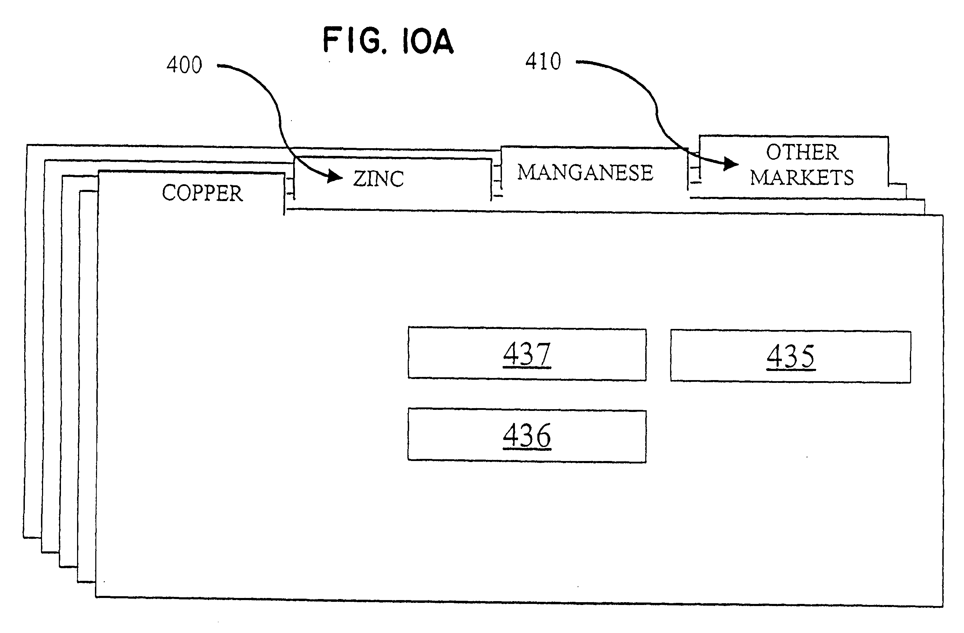

FIG. 10A shows a more detailed example of a "flip widget" in a second state.

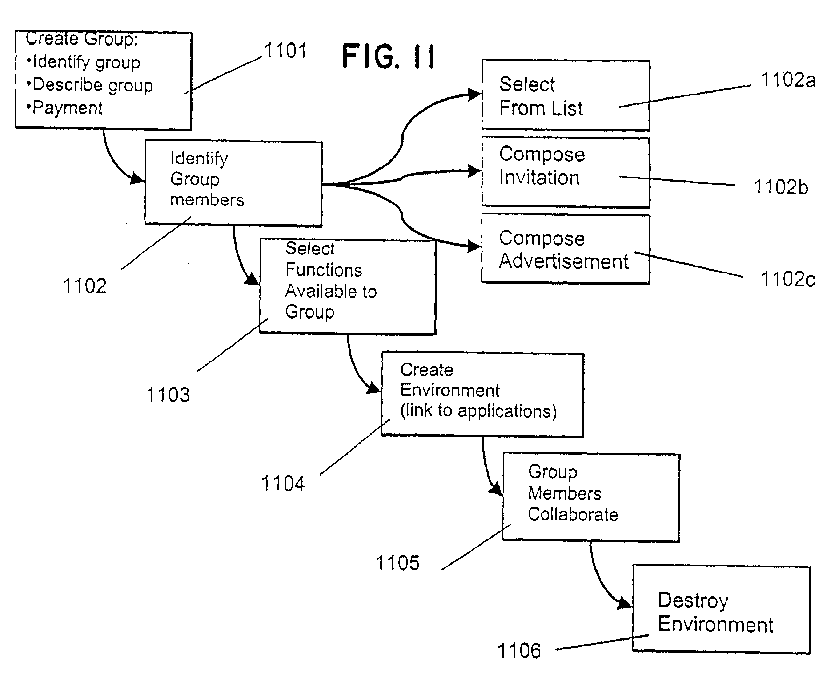

FIG. 11 shows method steps that can be carried out to define, create, and destroy an environment according to a second embodiment of the invention.

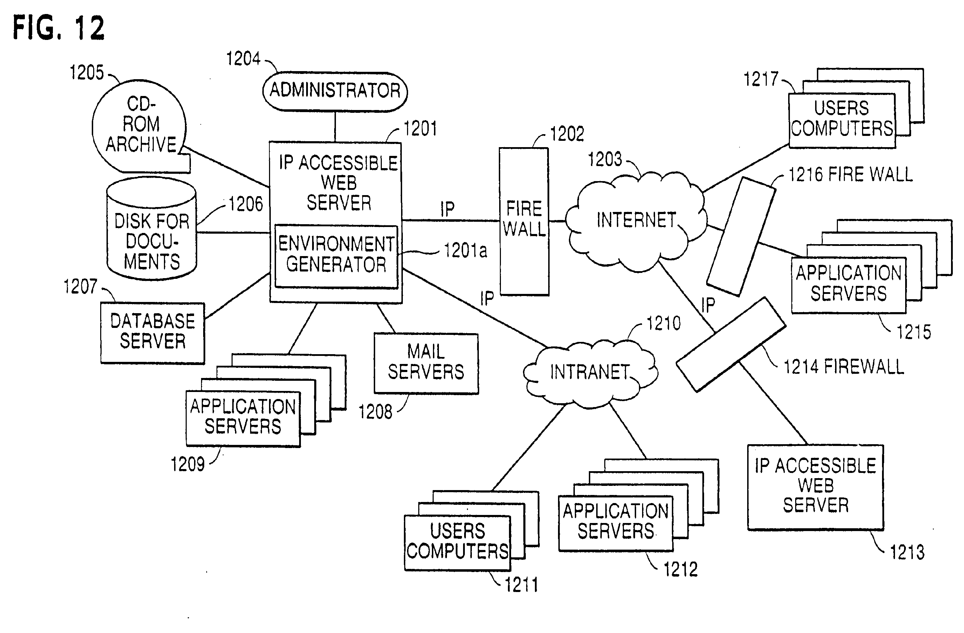

FIG. 12 shows one possible system architecture in which various principles of the invention can be implemented.

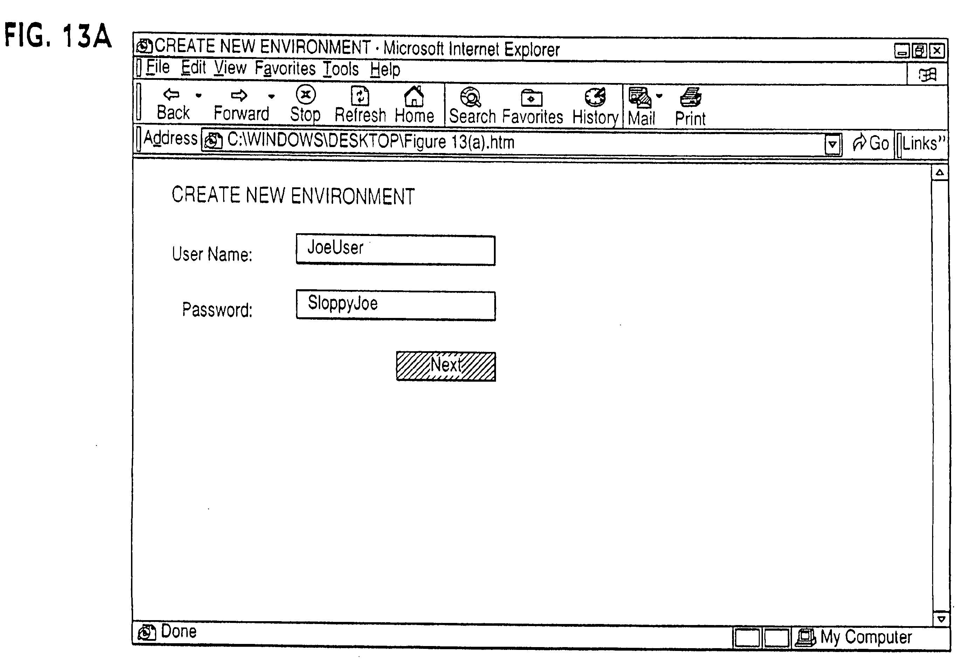

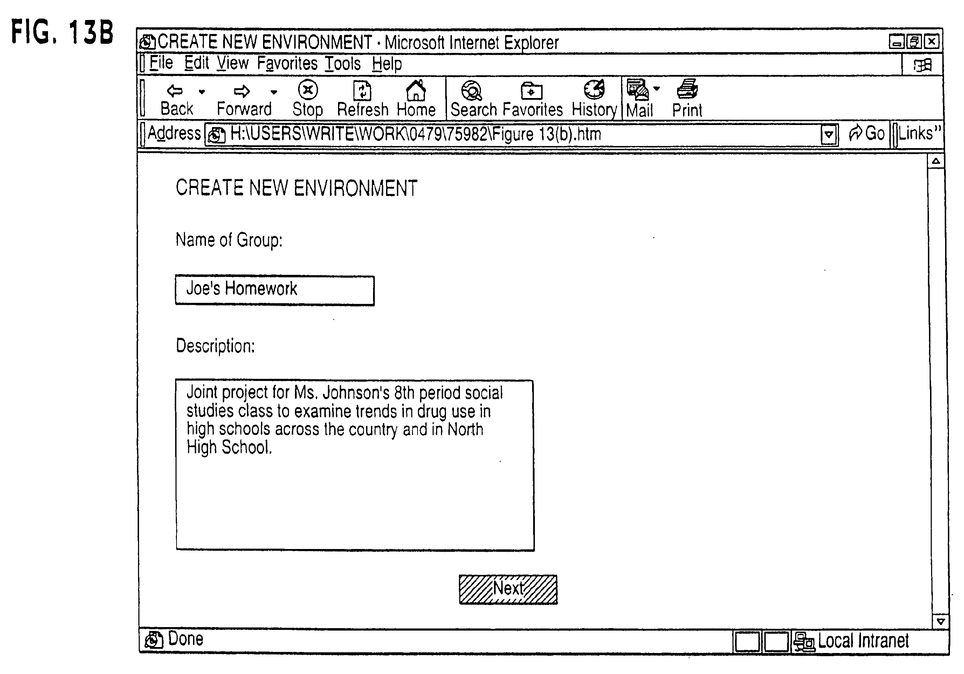

FIGS. 13A through 13C show one possible user interface for creating a group and identifying group members.

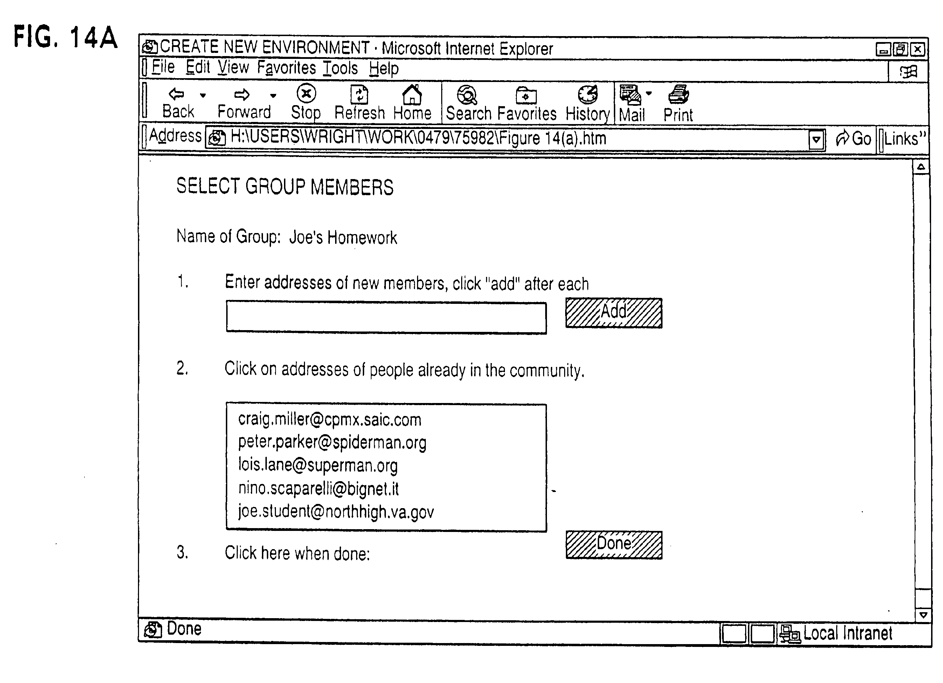

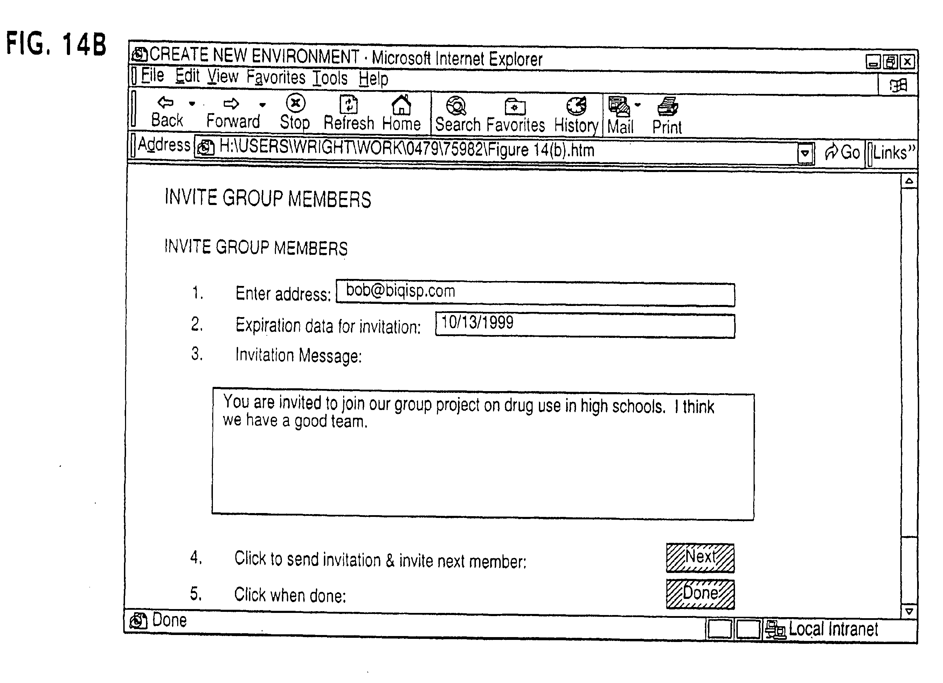

FIG. 14A shows one possible user interface for selecting group members from one or more lists.
FIG. 14B shows one possible user interface for selecting group members by composing invitations.

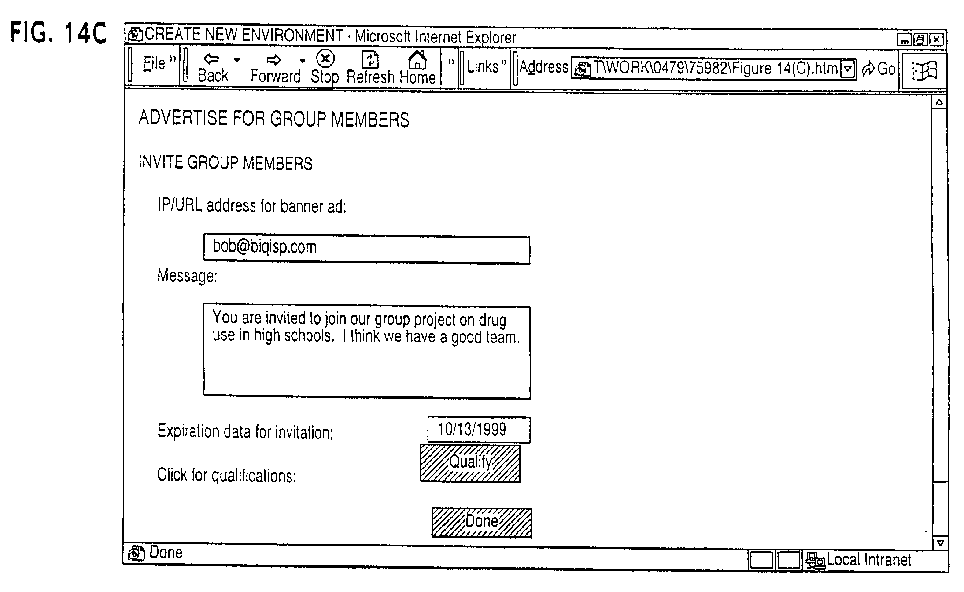

FIG. 14C shows one possible user interface for selecting group members by composing an advertisement.

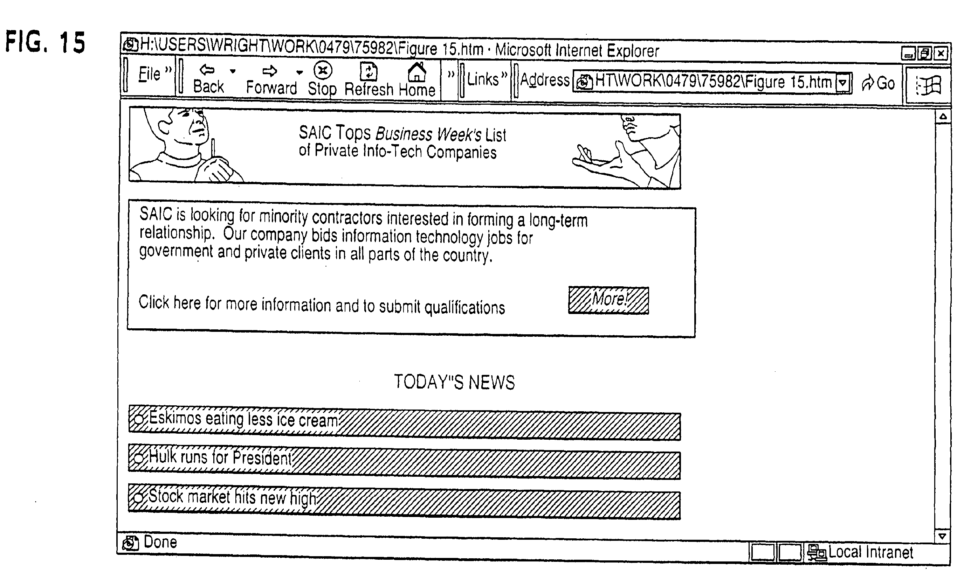

FIG. 15 shows a banner advertisement 1501 displayed on a web site, wherein the banner advertisement solicits participation in a group.

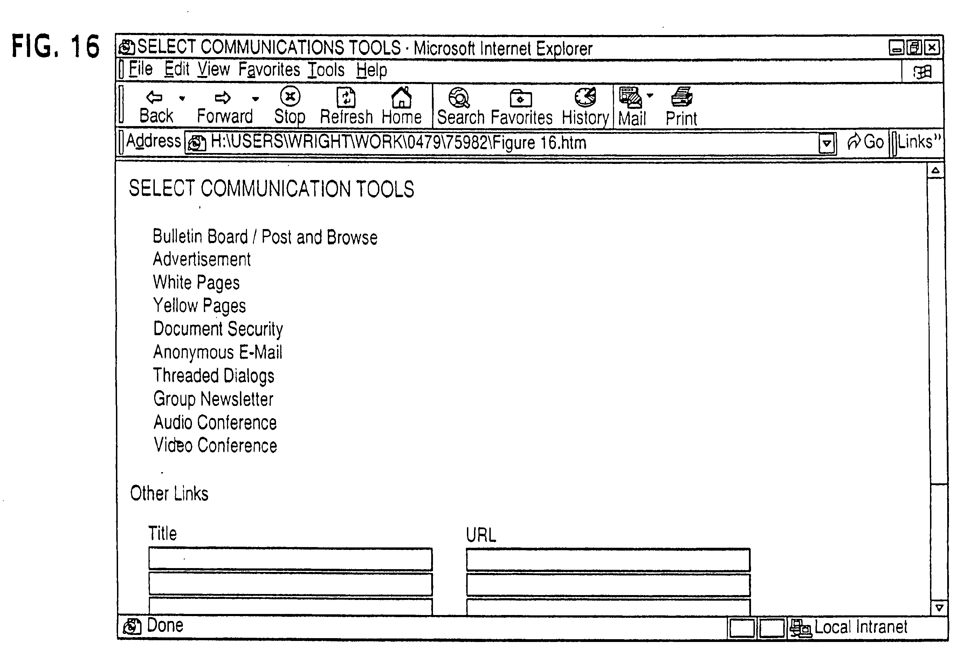

FIG. 16 shows one possible user interface for selecting communication tools to be made available to group members.

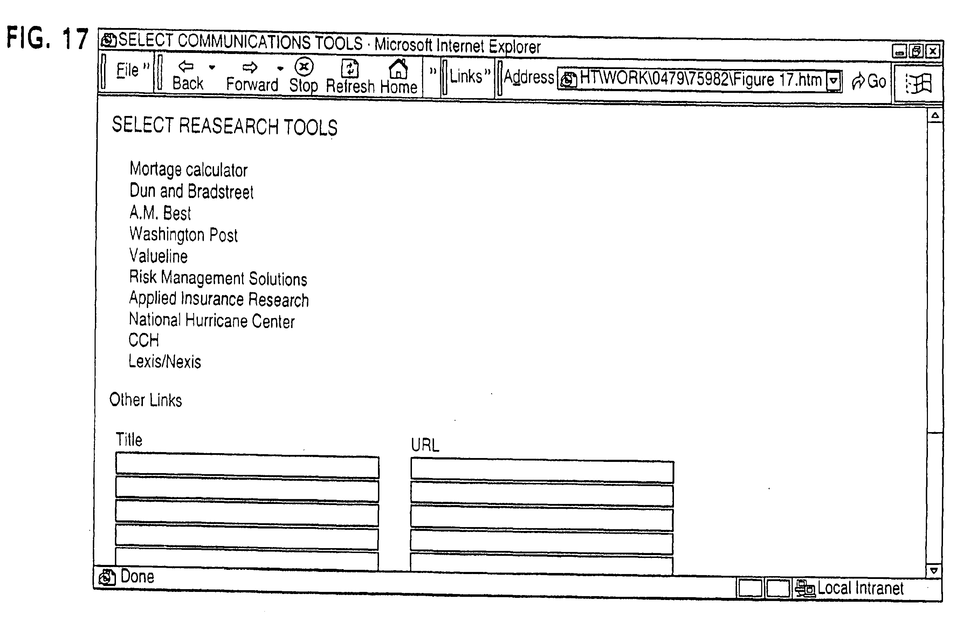

FIG. 17 shows one possible user interface for selecting research tools to be made available to group members.

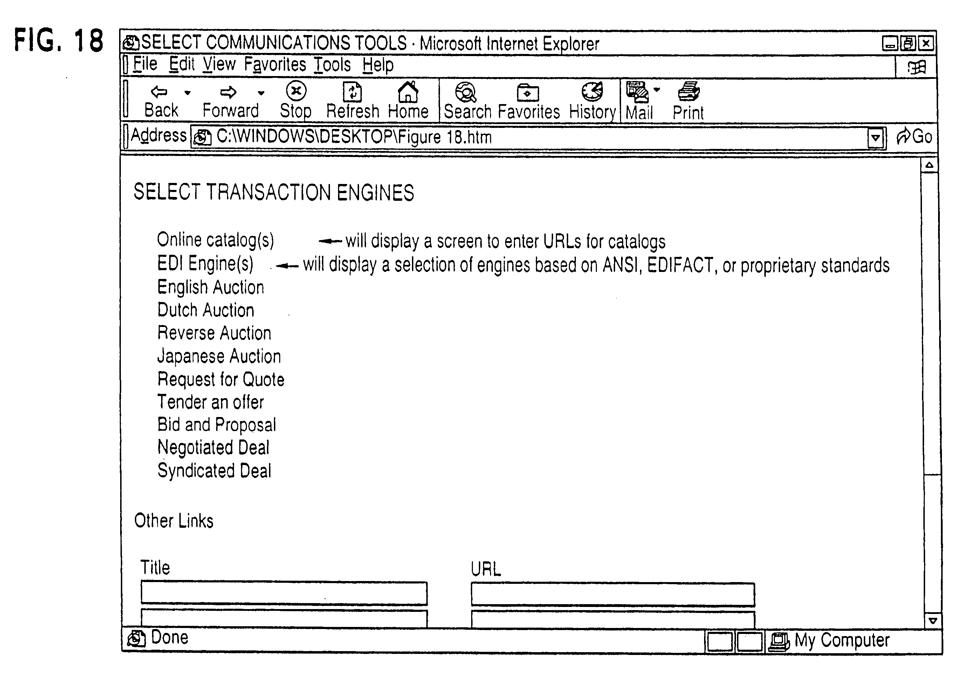

FIG. 18 shows one possible user interface for selecting transaction engines to be made available to group members.

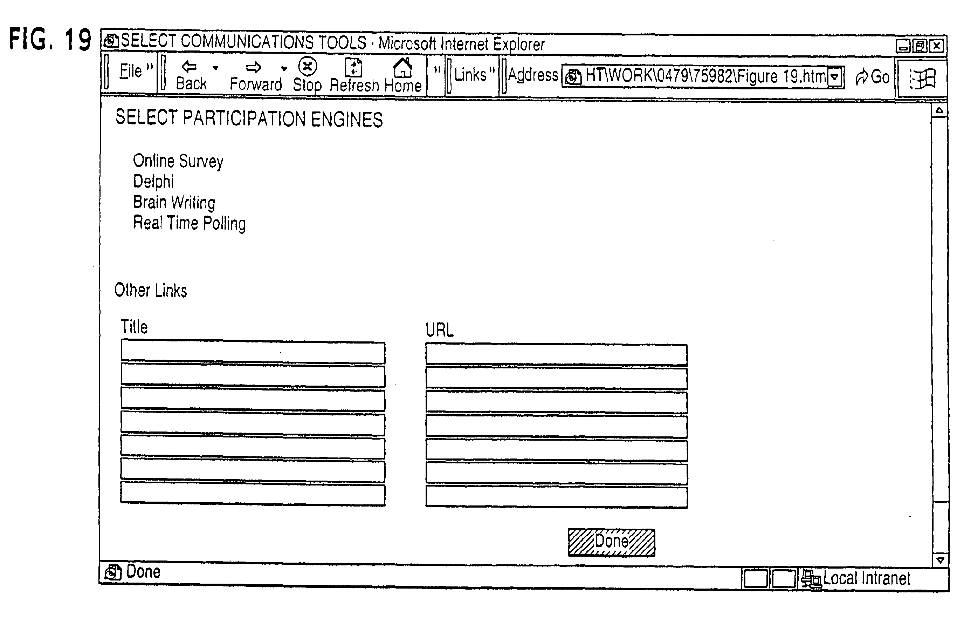

FIG. 19 shows one possible user interface for selecting participation engines to be made available to group members.

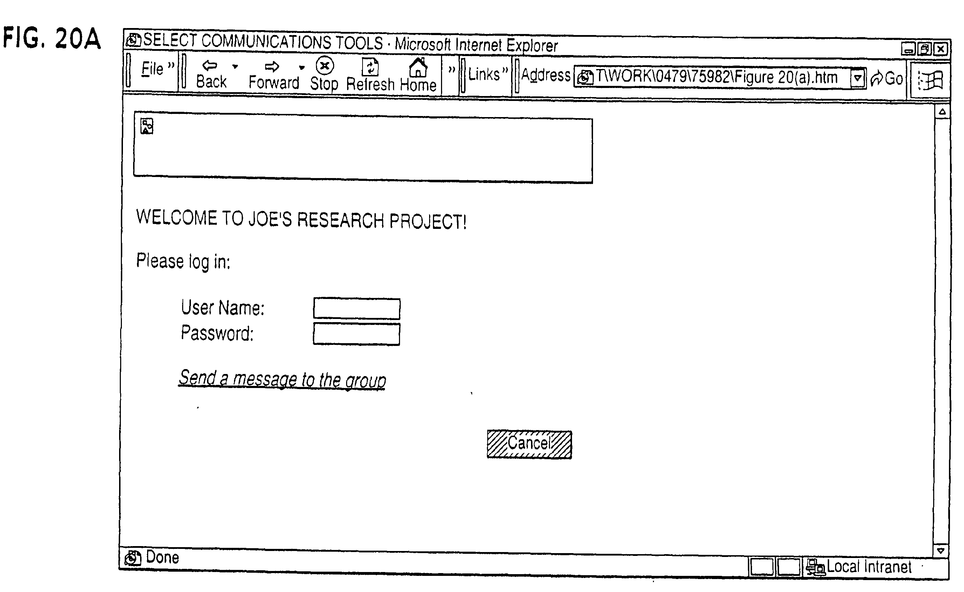

FIG. 20A shows an authentication screen for group members to gain access to a newly created environment.

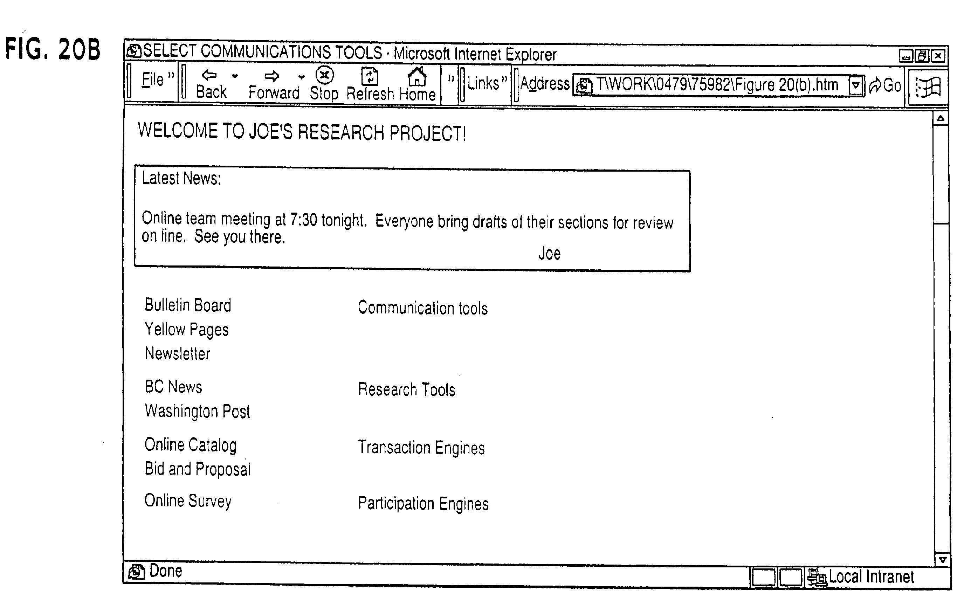

FIG. 20B shows a web page generated for a specific user-defined environment, including tools available to group members having access to the environment.

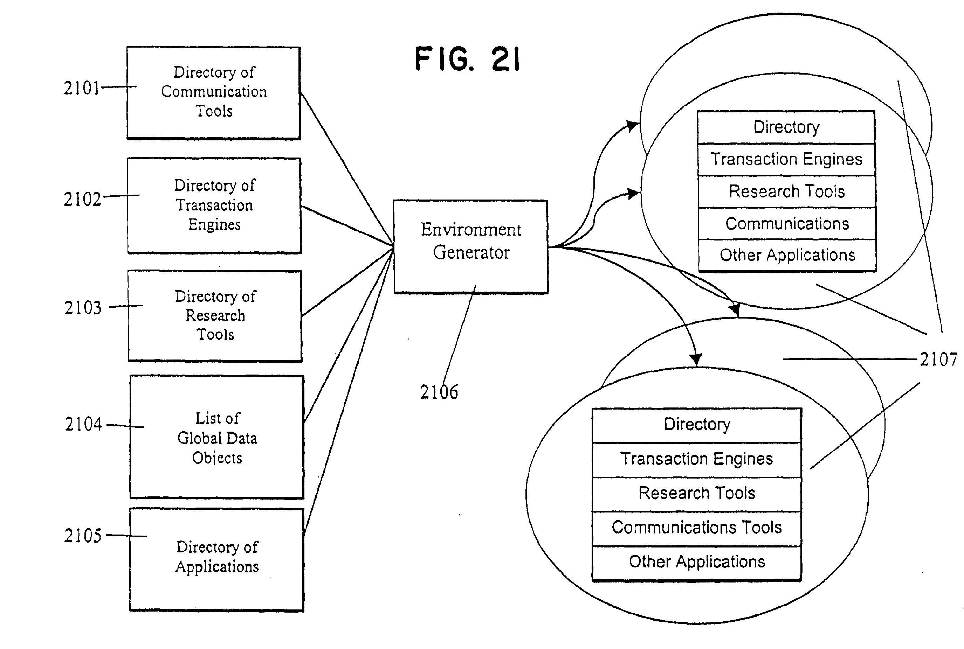

FIG. 21 shows one possible method of generating environments in accordance with various aspects of the present invention.

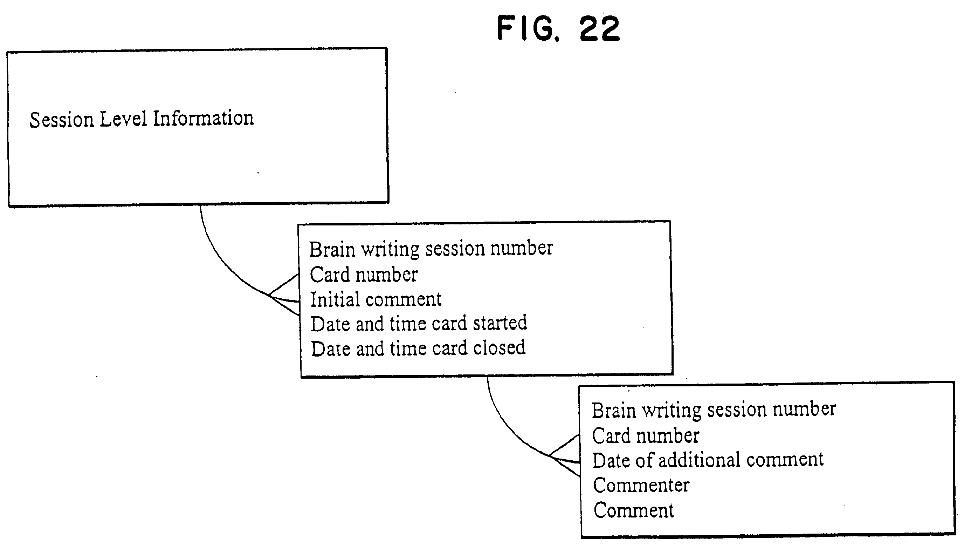

FIG. 22 shows one possible data storage arrangement for storing and manipulating brain writing cards.

### DETAILED DESCRIPTION OF THE PREFERRED EMBODIMENTS

### A. COMPLEX INSTRUMENT TRADING ENGINE EMBODIMENT

A first embodiment of the present invention provides a second-generation version of a complex instrument trading system. The second-generation system includes specialized tools that were not included in the first version of the prior art CATEX insurance trading system described above. These tools represent a substantial improvement over the first generation and incorporate new concepts of communications in a trading environment, and other capabilities that did not exist in the first generation technology. In addition, it is believed that many of these tools are also applicable to software systems other than the Complex Instrument Trading Engine or Negotiating System (CITE) described herein. Thus, the inventive principles are not limited to trading systems for complex instruments, nor even to trading systems in general.

Primarily, the tools described herein ameliorate certain difficulties associated with trading of complex instruments. Complex instruments are instruments where there is more than one dimension for negotiation. As compared to such instruments as securities, complex instrument transactions take longer to research and consummate and require more extensive documentation. For example, stock trading employs a simple instrument (a share) and negotiation focuses on one dimension (price) while insurance contracts have many dimensions (term, price, coverage, definitions of perils, etc.). The stock market is relatively simple to automate -- as soon as bid and asked prices match, the deal is concluded in an instant according to the rules of the exchange. Automation of complex trading is much more difficult, since the parties must negotiate and reach agreement on multiple dimensions and document that agreement using an instrument specific to the precise agreement. Automation of complex instrument trading is more difficult in every way than trading simple instruments.

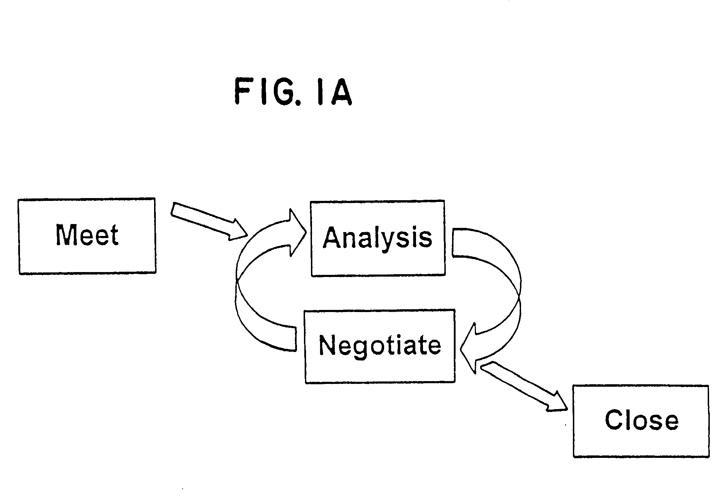

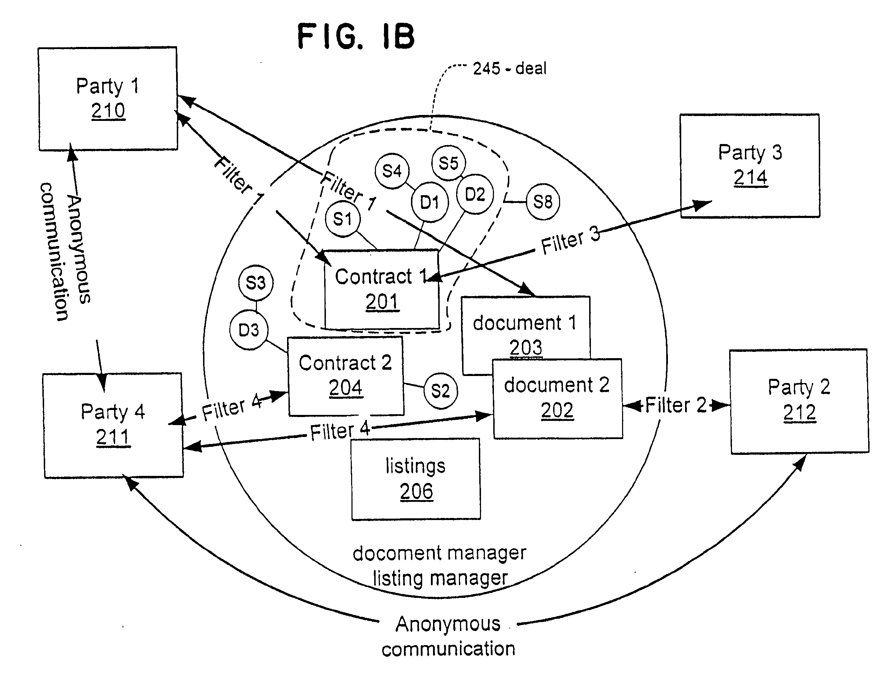

The trading model behind the Complex Instrument Trading Engine or Negotiating System is built around a simple, four-step model of deal making. Referring to FIG. 1A, the steps are as follows:
1. Meeting: Potential buyers connect with potential sellers with reciprocal interests. This connection does not mean that a deal will necessarily be concluded but simply that the two parties have some basis for continuing discussion. In simple instrument trading, it is typically only necessary to advertise quantity and price offered or sought. Offers for complex instruments must include substantially more detail and (frequently) extensive attachments or exhibits.
2. Research/Analysis: Each company considers its own position and/or offer and the counter party's position. Using information and analytic tools from various sources, including internal resources and resources provided by or through the trading system, each party does research and refines its position. The multiple dimensions of complex instruments increases the analytical complexity and limits the value of a simple market price. As indicated by the arrows in FIG. 1, this step is usually performed iteratively with the negotiation.
3. Negotiation: Parties to the negotiation speak directly and exchange whatever information is necessary to advance the deal. As indicated by the arrows in FIG. 1A, this step is usually performed iteratively with the research step.
4. Close: the companies negotiate and sign an instrument that documents the deal. This can be a complete and detailed contract, or it may be a simple memorandum. In simple instrument trading, the actual trade agreement is often standardized by the exchange. In complex instrument trading, the agreement must be more specific to the deal, though it is possible to use such tools and fill-in-the blank forms.

Within a system using these complex instrument tools, trading parties can place offers to buy, sell, or trade in a public area, and examine such offers ("listings") posted by others. Using advanced communications tools the parties can conduct initial discussions to determine if a placement is possible. Using tools described herein, the initial contact can be done anonymously.

If a deal seems possible, the system preferably provides access to the extensive information necessary to assess the possible deal. This can include static information (e.g. reports or data) maintained within the system, links to information providers outside the system, online analytical tools, and links to providers of analytical services.

For complex instruments, the process of negotiating a deal is contemplated to be an iterative one, with successive stages of analysis and discussion. The need for extensive communication is one of the critical distinctions between trading of simple instruments (e.g. retail sale) and complex instruments. Complex instrument trading requires dialog and more -- exchange of documents (often voluminous), consultation with counsel and intermediaries, conferencing, and working together on the final agreement. For electronic commerce to have an impact in complex instrument trading, it must support and facilitate this communication, and not force traders to fall back on methods and technology outside the electronic trading environment.

The final step is closing the deal. The companies can negotiate a contract online. Tools provide sample, fill-in the blank contracts and memoranda of understanding as a starting point. Negotiators can begin with these, or they can use one of their own. Collaborative software makes it possible to display text simultaneously on each negotiator's screen and to work on the language together. When the contract is final, the system allows for secure, online signature, though companies not comfortable with electronic signature for very large deals may print a hard copy and sign it conventionally.

By creating electronic exchanges for complex instrument trading, the CITE tools can have a fundamental and positive impact on many areas of commerce:
1. An electronic exchange makes it possible to put an offer in front of more people more quickly than could be informed through direct contact, even allowing for active intermediaries or brokers.
2. Traders can advertise and conclude deals without the need for an intermediary when they have adequate support or internal resources.
3. Through better communications, wider exposure for offers, and the first steps towards standard contract language, electronic trading of complex instruments can substantially reduces transaction costs.
4. With lower transaction costs, it is possible to conclude deals that were not possible with higher overhead.
5. Through the immediate posting of the results of trades, pricing is moved towards a market basis, reducing research and analysis costs enormously. This speeds placement.
6. Smaller exposure means lower risk, and market pricing is an adequate surrogate for analytically derived pricing in some circumstances. Together these factors make it possible for traders to participate in markets or market segments in which they would not normally do business.
7. By making it possible for all companies, large and small, to talk directly to each other, electronic trading of complex instruments can lead to the democratization of the marketplace increasing competition.

Overall, electronic trading of complex instruments has the potential to improve the efficiency of markets enormously, and to establish markets in areas of commerce that are currently done through intermediaries or on a one-on-one basis. The trading tools described herein are designed to facilitate electronic trading of complex instruments. The first-generation complex instrument trading tools broke new ground in the extension of electronic commerce into new and more complicated markets. The table below summarizes the areas of new and improved technology, organized into the four steps of the general complex instrument trading model.

| Phase | First Generation Complex Instrument Trading Technology (PRIOR ART) | Advanced Complex Instrument Trading Technology |
|---|---|---|
| Meet | • Operates on private network only | • Operates on private network or over the Internet |
| | • Post a listing to board by filling out a form | • Post listing to a board by filling out a form |
| | | • Listings and responses can have attachments and documents |
| | • Display listing summary in a table | |
| | | • Display listing summary in a table, with sorting by title, date, market type, buy/sell, or listing number. |
| | • Search listings by key word | |
| | | • Search listings by keyword |
| | | • Register keywords with an electronic "agent" that monitors listings and sends notice of relevant new listings by Email |
| | • Post response to listing on board | |
| | | |
| | | • Post response to listing on board |
| | | • Send private response (anonymously or with name attached). |
| | • Establish communications with lister by following up on contact information in listings using unconnected communications tools | • Response can be through a "reply card" designed by the trader posting a listing, to structure responses |
| | | • Direct connection between listings and communications tool |
| Analysis | • Internet access to research resources, on line and third-party analysis | • Internet access to research resources, on line and third-party analysis |
| | | • Research resources searchable using the same search engine and display as used for listings. |
| | | • Online dialogs / user groups |
| Negotiation | • Requires private network | • Works on Internet or private network |
| | • Directory of contact information for all traders | |
| | | • Directory of contact information for all traders. |
| | • Connection between directory and Email client. | |
| | | • Direct connection between directory and Email client |
| | | • Direct connection between directory and online conferencing software |
| | • Directory not linked to other components of the system | |
| | | • Directory linked to listings and document management tool |
| | • Anonymous mail application providing for communications between two individuals | |
| | | • Anonymous mail application providing for communications between individuals or groups of people working together |
| | • Anonymous mail delivered to mail client | |
| | | • Anonymous mail does not require separate Email client software |
| | • No attachments for anonymous mail | |
| | | • Anonymous mail supports attachments |
| | • No system for central repository of documents | |
| | | • Intemet-based system for distributions and sharing of documents. |
| | | • Password and secure has protection for documents. |
| Closure | • Requires private network | • Internet or private network |
| | • Online signature of uploaded document | • Online signature of uploaded document |
| | | • Registration / closure of deal through a fill-in form |
| | | •Provision for digital signature and archiving of all documents associated with a deal |

Referring to FIG. 1 B, one aspect of the system within the framework of the negotiation/analysis loop shown in FIG. I, is the ability to define one or more contracts, for example, in the parlance of the reinsurance trade, "slip sheets." Various members of a group of authorities modify the contract causing it gradually to take a final form that is either rejected as untenable or accepted as a finalized deal. The system exposes various aspects of the contract and attendant documents to the appropriate participants in the transaction, also providing each with a level of authority to add, delete, or modify documents as well as the evolving contract or contracts (assuming there may be various contract templates being discussed). These filters (filter 1 through filter 4, for example), as shown in FIG. 1B, determine the authority of the party (Party 1-Party 4) to modify or see the data object, whether it is a document or a slip sheet. The system combines this system of filters with signature technology for closing the deal; that is, implementing signatures so that an enforceable contract is generated.

A deal is like any other data object and once it is defined and entered, it cannot be modified. Elements of the deal can be "signed" such as documents attached to a contract (for example, Contract 1 has documents D1 and D2 attached to (combined with) it. Together these elements, the contract and the attachments, define the deal. Also, the entire deal 245 can be signed using a signature device ("widget") S8. Other documents may relate to a deal but not be attached. These can be viewed using a document manager described further below.

### Listing System

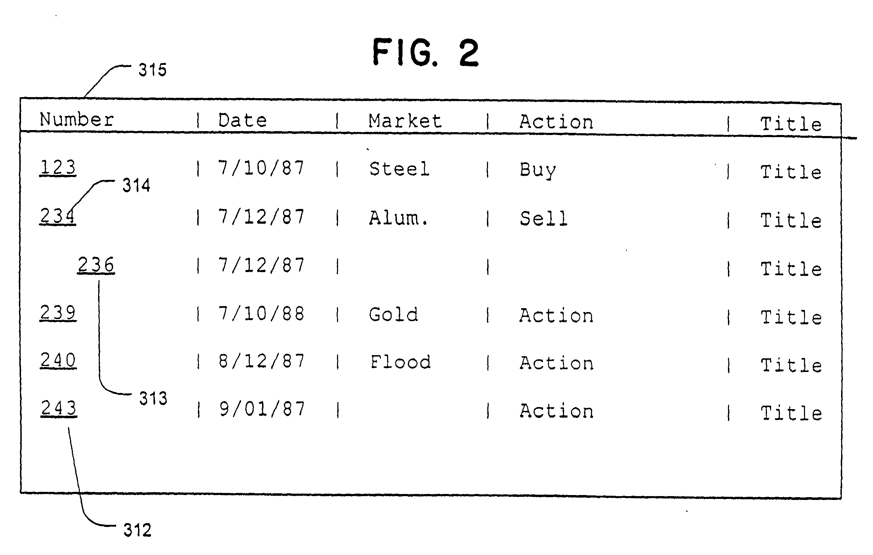

Referring to FIG. 2, a listing screen displays all offers for contracts, for example offer 314, as well as responses to them, for example, response 313_ The parameters of the offers and responses to them are shown in columns, the heading of each of which may be selected to sort the listings by that heading, for example heading 315 if clicked would sort by the unique index number for the listing. Notice that the responses (for example, response 313) are shown indented to indicate a series of elements of a dialogue-thread. As indicated, the responses have a "daughter" relationship to the parent listings. That is, listing 314 is a parent and reply 313 is a daughter. The daughters remain in their hierarchical position beneath the parent despite sorting by the column headings. This makes the tabular sort scheme compatible with a threaded display, which is useful to show dialogues.

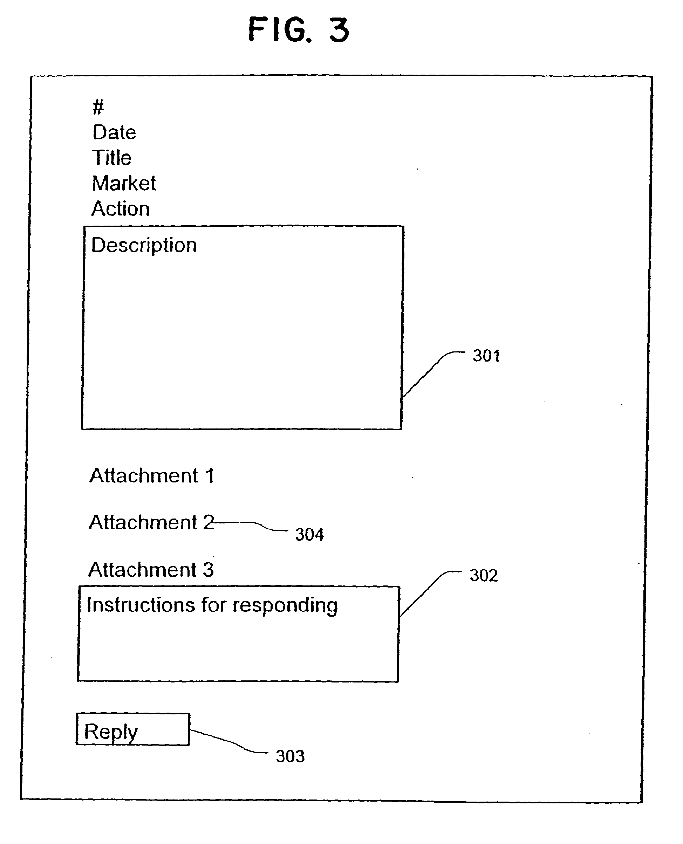

Referring now also to FIG. 3, when a user invokes a display of the details of a listing by clicking on an index hyperlink 3I2 to show the details of the listing, a. user interface element displays the lister's defined parameters of the listing. As shown, various parameters are displayed, many of which are hyperlinked. For example, attachments 304 may be selected to display the corresponding attachments. A detailed description 301 may be provided as well as specific instructions for responding 302. A reply button 303 permits the user to reply. Activating the reply button 303 will either invoke a standard public reply screen which creates a new listing similar to the parent listing or a special reply defined by a reply card which is further described below.

A reply to a listing can take the form of a public reply that invokes a screen substantially the same as FIG. 3 but with blank spots for entry of reply information. A more useful kind of response element is a reply card that can be defined by the lister. This is because in negotiations on complex transactions such as reinsurance contracts and, for example, pollution emission allowances, the parties with whom a lister would be willing to trade are limited in terms of certain criteria. These criteria will vary from one type of transaction to another.

In an active trading system, the number of listings can quickly grow to a large number and quickly exceed the number which can conveniently be displayed in a single table. Several capabilities are built into the system to address this problem. First, by default, listings are presented in order from newest to oldest. Second, the sort capabilities previously described allow users to modify the standard order. Third, the total market may be divided into subcategories. In the area of insurance catastrophe risk, these could include categories for different lines of insurance (e.g. marine, aviation, commercial buildings). Fourth, users may enter search criteria to identify a subset of listings of particular interest.

Searching listings: A user may enter a keyword such as "hurricane" to identify all listings that contain that word in the title, description, and (optionally) attachments. To improve the reliability of the search, users are provided access to a standard lexicon when composing a listing. In the first embodiment, this capability is invoked by pressing the right mouse button while the cursor is any field of the listing. A list of common terms is displayed. The user can select the term of interest, which is then placed into the text of the listing at the insertion point marked by the cursor. For example, a listing for insurance risk would typically include a field for geographic scope (i.e. the location of the properties to be insured). When in this field, the lexicon displayed would include terms such as "California" and "Coastal Florida". Choosing a term from the lexicon insures uniformity of terminology across listings and between the search engine and the listings. "California" will be used rather than a mix of "Ca", "CA", "Calif", etc. The search is further improved by symantic indexing. Essentially, this means that synonymous terms are grouped, so that searches for one will find the other. A person who searches for "California" will get listings for "Los Angeles" that do not include the word "California".

The search engine can include an agent capability. This agent capability offers the user the option of saving a search, after the user reviews the results and deems them acceptable. This search is retained in a library of searches along with the email address of the owner of the agent. The search is retained in the library until is it either deleted by the user when it is no longer needed or automatically deleted in a cleanup of searches older than a certain date. Whenever a new listing is placed on the system, all of the saved searches are executed. If the new listing meets any of the search criteria, a message is sent to the owner of that criterion via email or instant messaging.

A model was developed to allow a lister to define a set of criteria and request a set of information from any respondents in the form of an anonymous reply "card." The card defines a set of requested information which may be packaged as a document object and placed in the document manager system and connected with each listing. A user would download the reply card and fill the card out and send it back to the posting party.

A document object, called a reply card, is made available to a respondent through the document manager. The respondent is permitted to retain his anonymity as is the lister. Each may communicate with the other through an Amail system described in more detail below. The respondent supplies the requested information and sends the data to the lister. A system in the listing manager allows a lister to define a reply card having any particular fields and instructions required of a respondent. Some of the information required may be obtained automatically from a set of default data stored on the respondent's computer.

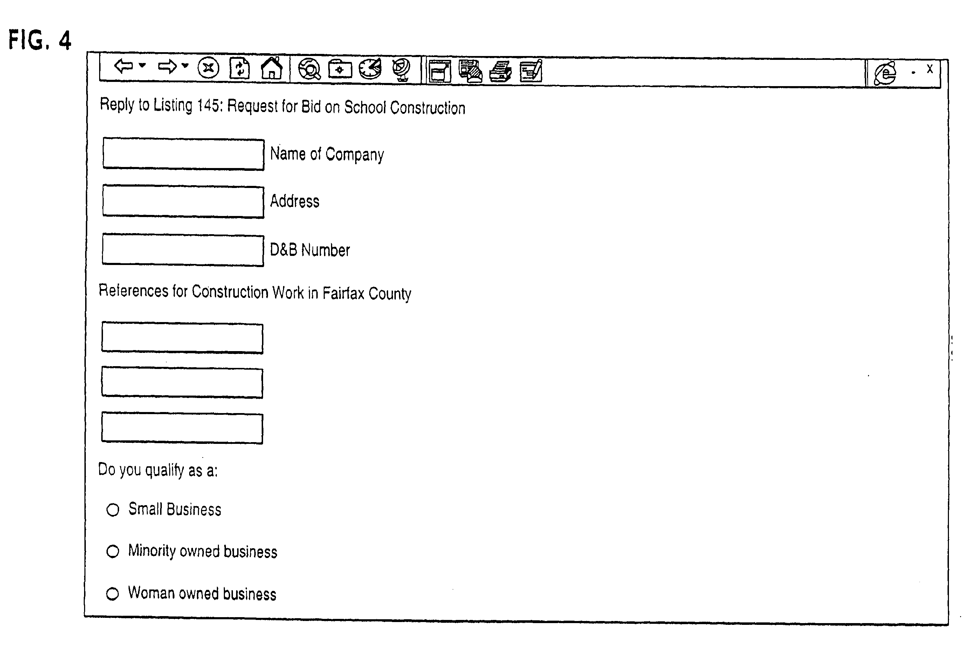

Referring to FIG. 4, a reply card definition screen is invoked to define the parameters of a new listing. The new listing is defined using a user-interface element looking much like FIG. 3. While the details are not critical, the definition of reply card involves, in essence, the definition of a user-interface control such as a dialog with radio buttons, text boxes, etc. These are definable for server-side implementation through HTML and are well known so the details are not discussed here. The lister defines a set of controls that allow the entry by a replying party of the information that the lister requires. The reply card is stored as any other information object and may be organized and accessed through the document manager described below. FIG. 4 shows a simple example of a format of a reply card.

A reply card is created by a user when posting a new listing. The lister specifies the information that must be included in a response, and the type of information object to display for the data element (e.g. a text box, check box, radio button). The system then creates an HTML page to collect the requested information. When a respondent clicks "Reply Card" on the listing screen, the page is displayed. All of the responses are automatically entered into a database created automatically when the reply card is composed. As each respondent fills out a reply card, a new record is added to the database of the system and the lister is permitted to view it through an appropriate filter as discussed above.

### Signature System

As business is increasingly done in an electronic environment, electronic signature and approval is becoming more critical. The typical electronic signature model has focused on two aspects:
1. Electronic validation of the user -- specifically determining that the person viewing a document on line is the authorized signatory; and
2. Validating the document being signed by a means that either prevents modification of a document or will reveal whether changes have been made.

Methods for validation of identity range from simple personal identification numbers or passwords, to electronic signature pads, and more advanced methods of biogenic validation such as fingerprint or retinal patterns. Methods for document validation range from simple archiving of one or more copies in a read-only model or inaccessible location to methods based on mathematical algorithms that create a characteristic number or alphanumeric string for a document. These strings are termed "electronic signatures." Changes to the document change the electronic signatures. Because the signatures are much shorter than the documents, very many documents have precisely the same signature, but the algorithms to calculate the signature are very difficult to invert, so that it is effectively impossible to deduce a meaningful change to a document that will preserve a specific signature.

These two aspects of electronic signature are highly developed, but there has been little analysis or development of the general process by which documents can be signed.

The invention allows for secure and reliable routing of documents, for which signatures are required, to a specified list of signatories. Unlike prior art systems, such as ordering or accounts payable systems which have highly structured signature procedures tailored to a specific process, the present invention provides a flexible method and system that allows a signature-type of authority/requirement to be attached any kind of information object. The method is sufficiently abstract, flexible, and general that it can be applied in many contexts aside from the CITE embodiment described in the present specification.

One signature method/device employs the following steps:
1. Registration of signatories - This process provides a register of identifiers indicating entities with signatory authority and correlates these identifiers with the information objects for which the signatory authority is applicable. The same register may also be used to identify other types of authority in the system in which the signature device is implemented. For example, document read authority, modification authority, exclusive access to documents, etc. may also be provided in the same register. Signature registration may be provided automatically in certain systems where registration of, for example, read/write authority is provided since any entity with signatory authority would in almost all instances, also be provided with some other kind of authority, most notably, read authority. Thus, where the signatory system is embedded in certain kinds of systems, it may be that no particular additional method or device is required to implement signatory registration since an existing register may already exist or be required for other purposes.
   Registration information includes the general categories of information listed below. Definitions of specific fields within these categories are a function of the specific implementation of the signature system or the parent system. The following are exemplary:
   1. Identity - unique identifier of the entity, the organization(s) with which the entity is affiliated, other relevant information.
   2. Contact information - information indicating how the entity can be reached, how documents and mail messages can be routed to the entity.
   3. Security Information - a password for each class of signature as described further below.
2. Classes of signatures - The device/method provides a variety of classes of signature, each associated with a unique level of approval or level of commitment. For example, a class of signature-authority can be defined that represents individuals, for example, with authority to sign contracts only below a set amount, or for expenses relating only to one department of an organization, or within certain time constraints, etc. The signatory system maintains this taxonomy of possible signature types in a database with a unique identifier for each level of authority defined. The system allows the creation and deletion of classes. Each class is preferably permitted to be named and a descriptive definition attached to each class.
3. Defining a Set of Signatures - Using an appropriate user interface element, the user of the system selects an information object (for example, a document, file, or collection of such objects) requiring signature(s). The entity originating the signature process then identifies the entity or entities required to sign the object. The specification of the signers can proceed either by the selection of individuals from a list supported by the above defined entity register. Alternatively, in an environment where individuals are strongly bound to organizations, for example, it can proceed by selecting the list of organizations that will sign and, within each organization, the person who will sign. The list is built by a series of selections. After each selection from the list, the user indicates his/her desire to add the selected individual to a list of required signatories. The user interfaces provides for entries in which all the selected signatories are required or only one of the selected signatories are required.
   For example, if more than one entity is selected from the list prior to the selection (e.g., clicking an "Add" button), the system may require a signature from any of the people selected, but not all of them. To require signature from every member of the group, the initiator may select one person, then "add", select the second, then "add", and so on. Thus, adding a group with one "add" command would provide an "any signature will suffice" list and adding members individually would require a signature from that individual or entity. Note that this technique may also be used to define combinations of required and "any of" groups.
   For each signer or group of signers selected in a single "add" command, the initiator of the signing sequence must specify the class of signature associated with the person for the document being signed. This may be selected from a list of signature classes (see item 2). If the specific implementation of the signature process only supports one class of signature, the selection of class may be omitted.
4. Random or Serial Order of Signature - After or concurrent with the creation of a signature list, the initiator specifies whether signatures must be in order or if a specific order is not required. For purposes of defining the order of signature, individuals who are selected as a group are considered as occupying a single place in the sequence.
5. Document Authentication - Upon initiating a signature sequence, the information object is authenticated by means of a secure hash algorithm. The specific hashing algorithm is a matter of design choice or may made dependent on a user's choice. There are several possible hash algorithms available in the public domain. The electronic signature produced by the secure hash algorithm is archived with the information object in a secure repository. If the information object is, for example, a record in a database, the contents of the record are copied to a file in delimited format for archival purposes. If the object is a table, the table is exported prior to archive.
6. Document Routing - Upon initiation of a signature sequence, the initiator specifies how the signatories are to be informed. The options are:
   - No notification from the signature system
   - Email message
   - Email message with attachment of the information object.
   - Posting on a signature web site
      The system accepts and implements the chosen method, which may be connected to the signature or a single choice applied to all signatories. Alternatively, the method of notification may be stored with the signature class definitions. In a signature process with no required order, e-mail notice may be sent simultaneously to all of the designated individuals at the time of initiation. If the process is serial, only the first person may be notified. The electronic signature of the information object may be included in an e-mail message.
7. Accessing the signature system - The signature system can be implemented for access via a web browser or database client-server software across the Internet, an intranet, a LAN, or a WAN. Access to the system will typically require a password, but this may not be necessary on a secure network. Upon access to the system a user will have the option to display a list of all of the information objects which he or she has signed or is being asked to sign. For each object, the display can include the following information:
   - Object name
   - Description of object (text, mime, size, date)
   - List of scheduled signatories
   - Date each person signed
   - Class of signature for each person
   - Electronic signature produced by the secure hash algorithm
      If the object is available (viewable) on line, the display may also include a link to display or download the object.
8. Validation of the Object at Time of Signature - If the user downloads or views the object, the system will execute the secure hash algorithm to calculate the electronic signature. This will be displayed so that the potential signer can compare it to the signature calculated at the time the process was initiated. If the user has previously downloaded the object or received it as an attachment to an Email, the user may access the secure hash code through the signature system and apply it to the version on the user's disk.
9. Signing a Document - After the user has determined that an information object is authentic and that the contents merit signature, he or she can affix a signature by authenticating his or her identity. Various means of authentication may be used. The means of authentication may be at the discretion of the manager of the signature system. Such means may include personal identification numbers, passwords, authentication based on computer address or information stored on the signer's computer, third party validation using a public key or other security infrastructure, or biogenic (fingerprint-recognition, retina scan) methods.
   After a document is signed, the date of signature is recorded in a database so that the display to other potential signers is updated. If the signature process is serial, the next person in the sequence is notified. E-mail notice can be sent to all signers when the last signature is collected.
10. Follow-up - At the time a signature process is initiated, the initiator can select a time (in hours, days, or a time or date-certain) for automated follow-up. If a document is not signed within the specified period after notice, a follow-up e-mail can be sent as a reminder. Additional reminders may be sent at the same interval if the object has not been signed. The reminders can be sent automatically by the system according to user-input specifications.
11. Cancellation - The initiator of a signature sequence can modify the sequence at any time, except that a signer can not be deleted from the list once they have signed an object.
I2. Transfer of authority - The individual initiating a sequence can transfer the right to modify the list signature list to another individual in the system with appropriate validation of identity.

### Document Manager

Successfully conducting commerce over an electronic network requires the exchange not only of messages, but of substantial blocks of information in the form of documents and data. Beyond simply transferring files from hand to hand, it is often necessary for multiple parties to work on a document simultaneously or serially, to track changes, and to maintain a record of versions. Two general architectures have emerged for document management, which can be termed a "mail model" and a "repository model." Under the mail model, documents are attached to messages and circulated person to person. Under the repository model, documents are placed in a central location. There are advantages and disadvantages to each. At a summary level:

| | **Mail Model** | **Repository Model** |
|---|---|---|
| **Advantages** | Precise routing on a document specific basis. Push in the recipient is informed of a new document. | Compact storage -- only one version of a file need to be stored. Natural group of files on the basis of subject or access group. Supports good configuration management and version control. |
| | Coupling between document flow and a messaging. | |
| | Dating is automatic. | |
| **Disadvantages** | Creates multiple versions of a document, confounding configuration management and version control. | Not push in the sense that users are automatically informed of new documents. Security model is more complicated than for email. Prior arrangement is necessary to access a repository. |
| | Does not easily couple to online collaboration. Many mail servers limit size of attachment. | |
| | Relatively high effort to prepare messages. | |

A browser-based document management model and tool combines the best features of repository model and the mail model, for document dissemination and sharing across the Internet or an intranet.
General Architecture - The general architecture of the system combines two basic components: (1) a database of directories and documents and (2) a directory of users. The directory of documents lists documents (of any type) contained in the system, and folders that can contain documents or other folders. The directory of users contains a list of individuals and organizations that can access the system, with passwords and/or other information necessary to validate identity and to establish authority.
Representation of document - The term "document" is used here in the broadest sense of any file that can be stored magnetically or electronically. Preferably, each file is given a unique name consisting of a string of no more than 256 characters. Preferably, the character set is limited to those members of the ASCII character set which are displayable or printable. Thus, such codes as "escape" which have no visible representation, would be excluded. This is the file name that is displayed for purposes of identifying the document to the users. There is also an actual file name (which is not shown to users) to identify where copies of the file are stored in the central repository. Certain other information is kept in addition to the name of the file. This includes the following:
1. Data of creation
2. Date entered into repository
3. Person who entered the document into the repository
4. Description
5. Size of the document
6. Document type if known
7. Date of last update
8. Access password (optional) stored in encrypted form
9. File folder(s) where the document appears
10. Actual file name

In addition to the above information, data indicating whether the file is checked-out and to what entity, and the identities of entities that have checked the document out and returned it in the past are also stored. The term "checking out" is described further below. These functions related to file change control and configuration management, which are discussed later.
User database- A database contains information on all individuals who can currently access the system or who previously had access up to an administratively determined retention period. This database includes standard contact information including physical and electronic addresses. Security data such as passwords and/or encryption keys is also maintained. In a combined system such as the presently described system, the same database or registry of users can be employed for the document manager as for the signature system.
High level directories- The entire document management system can be divided into a number of high level directories that the user can display, one at a time. These include, at a minimum, a "Private" directory of files and folders visible only to the user, and a "Public" directory of files and folders visible to all users. Additional high-level directories can be created by the system administrator as needed. These could correspond to projects, business units, or any other logical basis. At any point in the use of the document management system, a user can see and select from the high level directories to which the user has access. The name of the currently open directory can be always displayed on the screen. Displaying, the contents of a high-level directory- When a user selects a high-level directory, the repository displays a series of file folders against the left margin of the active window. File folders whose contents are displayed are shown as open folders. File folders who contents are not displayed are shown as closed folders. A folder is opened or closed by clicking a single time. When a folder is opened, the contents are shown with an indent to indicate the parent/child relationship between the folder and its contents. Each folder can contain files, shown by an icon representing a printed page and other folders, represented by an image of a closed folder.
Information about a folder - Information about each folder is displayed on the same line, to the right of the folder icon. This information is as follows, from left to right:
1. Name of the folder
2. Number of files in the folder, or the word "empty"
3. Accessibility of the folder
Accessibility refers to user access rights to a folder which may private relative to the entity that created it, restricted (limited to a subset of people who can access the high level directory), or shared (available to everyone with access to the high-level directory). The level of access to a directory is indicated by the words "private", "restricted" or "shared."

If the directory is restricted, clicking on the word restricted displays a list of the entities that have access to the folder. This list is a series of hyperlinks. Clicking on the name of a person pulls up detailed contact information (discussed below). The objective is to facilitate communications between people with a shared interest in a file.
Information about a file - Information about a file is displayed to the right of the file icon. From left to right, the first item displayed is the name. This is followed by the word "details." Clicking on "details," causes the document management system to display complete information about the file (see Item 2, above), the person who placed the document in the file, (see Item 3, above), and the person who most recently modified the file.
Information about people/entities, and the link to communications - Information. about people/entities with access to the system is displayable at several points in the document manager system:
1. by accessing the directory of users
2. when creating a new folder with "restricted" access
3. when displaying detailed information about a file (see #7)
4. when displaying information about a restricted directory (see #6) Whenever such information is displayed, contact information from the database is rendered along with the name. Depending on the implementation, this can include complete contact info (multiple addresses, telephone and fax numbers, and email addresses), or some of the contact information may be restricted, in which case it is not displayed.
   Creating a new top level folder - A new folder is created within a high-level directory, for example by clicking a button labeled "new folder." This can bring up a dialog in which the user assigns a name to the new folder and selects the type of access (private, shared, or restricted) rights to be assigned. If the document is restricted, the user specifies the entities (organizations and/or people) that can access the folder. If the creator of the folder specifies that an organization has access to a folder, all individuals associated with that organization may be granted access. Folders to which a user does not have access may remain hidden or not displayed. Alternatively, these folders can be shown with some indication that they are not accessible, for example, by ghosting.
   Functions related to a folder - Once a folder is defined, a user can execute the following options.

1. Create a subfolder, using the same process described in 9
2. Add a document to the folder, using the process described in 11
3. Delete the folder, if it is empty
4. Modify access to the folder using the same tools used to specify access initially
   The functions can be invoked by, for example, clicking on the appropriate label to the right of the name of the folder icon.
   Adding a file - Users add a document using a dialog box that prompts for the following information:

1. Location of file - may be entered by user, or selected through a standard file browse dialog
2. Name to be used for the file in the repository
3. Version number or name (optional)
4. Password or encryption key (optional)
5. Description (optional)
6. Access rules (read only or read-write)

After entering the above information, the user either aborts or initiates upload. The information listed above is recorded along with the name of the person entering the document, and date and time.
File options - The following functions may be provided, preferably for every file in the system:
1. Delete (with confirmation)
2. Archive. The file is removed from main repository, but a copy is retained outside the repository. It may be restored though manual intervention.
3. View or download: a copy of the file is brought to the user's computer. This file can be modified there for the individual user's use. A modified version can be uploaded as a new file or different version of a current one, but a file in the repository can only be replaced if the user has it checked out.
4. Check out / check in (see below)
5. Forward (see below)
6. Change Password. The old password must be entered followed by a new password and confirmation.
7. Move: copy or more a document from one folder to another.

The functions may be invoked, for example by clicking on a label corresponding to the function, which can be displayed to the right of the name of the file. Not all options are shown to all users. If an entity does not have write-access to a file, the entity may not delete it, archive it, check it in or out, or change the password.
Check in / Check Out - All entities with write access to a file may check it out. By checking the file out, the entity reserves the exclusive write to save changes to a file. A person may not replace a file that is checked out. To check out a file, the user selects this option from the list of functions associated with the file. The user can then enter an expected return date and a reason that the file is checked out or the changes to be made. This information is available to all others who can view the file. Each check in or check out is recorded in a permanent log. After a file is checked out, the "check out" button or link is changed to read "check in."

Each individual can check in only the files that he or she has checked out. This is done by clicking "check in." The user may then upload a new version of the file by specifying the location of the file on disk, or indicate that the version of the file currently in the repository is to be retained. After a file is checked in, the check button is changed back to "check out" and the file can be checked out by another user.
Forwarding - A file can be forwarded to any other user of the system. When the forward function is invoked, a list of users is displayed. The sender selects one or more users. Upon confirmation, a copy of the document is placed in folder labeled "in box" in each recipients private directory.

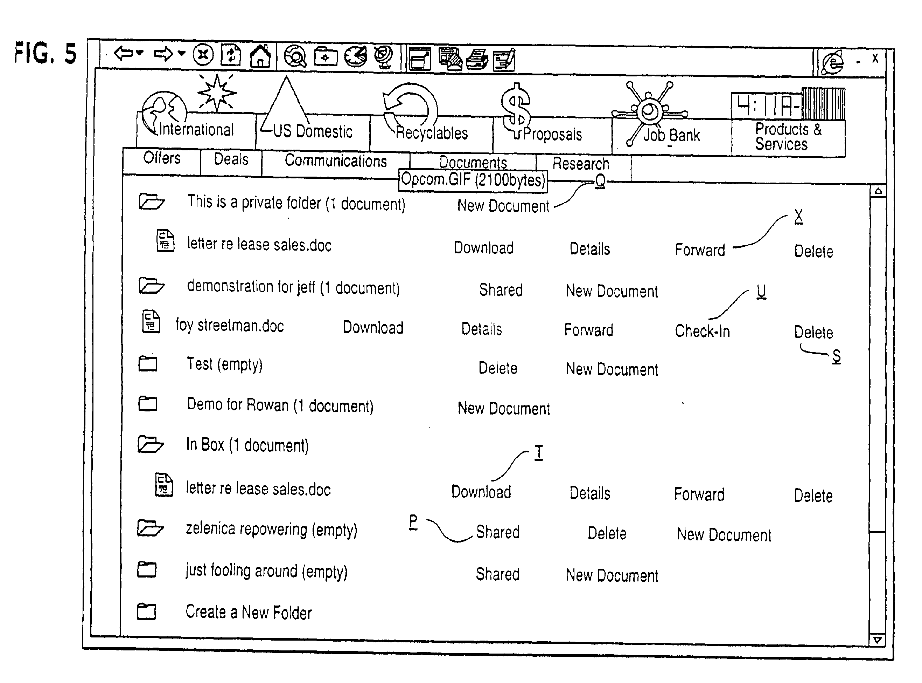

Referring to FIG. 5, a main screen for the document manager creates (using server-side scripting) a user-interface display with some of the features of a Windows Explorer® -type display. File and folder icons are shown along with an array features arranged next to each. The similarities with Windows Explorer® fairly well end there, however. Each of the properties shown next to each file/folder entry invokes a feature.

A parameter object W "Details" invokes a detailed display of the corresponding document object. The details can include contact information about the creator of poster of the document or other data as desired. This data can be hyperlinked and a return button can be provided to return the display back to the screen shown in FIG. 5. Clicking the "details" button to the right of any document brings up the display which can include the name, contact information, and other details about the person who loaded the document into the system, similar information about a person who has the document checked out, and, optionally, a description of the document and information on its change history.

A parameter object X "Forward" simply sends the document to a selected user. A selection screen can be invoked to allow selection of the recipient of the document from the user registry. Of course, since most correspondence can be handled on the server side, the user is, in reality, simply notified of the transfer and the recipient's action to view the document simply invokes a server side feature to display the document. The document is not actually transferred bodily to the recipient since the recipient, as a registrant logged in the user registry, can access it through the server by requesting to do so.

A parameter object U "Check-in" checks in a document that has been checked out. Other users may view the document, but not modify it when it is checked out. This button is not accessible to users that have not checked the document out and may be displayed ghosted or not displayed at all. A similar button can be displayed if a document that is not checked out may be checked out by the user authorized to see the document manager displayed shown in FIG. 5.

A parameter object T "Download" actually transfers a copy of the document to the client computer. Another object S "Delete" allows the document to be deleted. A new document can be added by clicking "New Document" Q. These are fairly conventional notions, except for their placement on the screen and the fact that each is filtered depending on the user's rights.

Note that when a folder is created, access to the folder can be restricted to the creator, shared with everyone (in which case the folder is created in the public directory), or shared with a select group of other users. The other users can be selected by company or organization (providing access to all individuals in the organization) or by individual within an organization. These are all selectable through a linked selection control where if one selects a company in one selection control, it shows employees in the linked selection control.

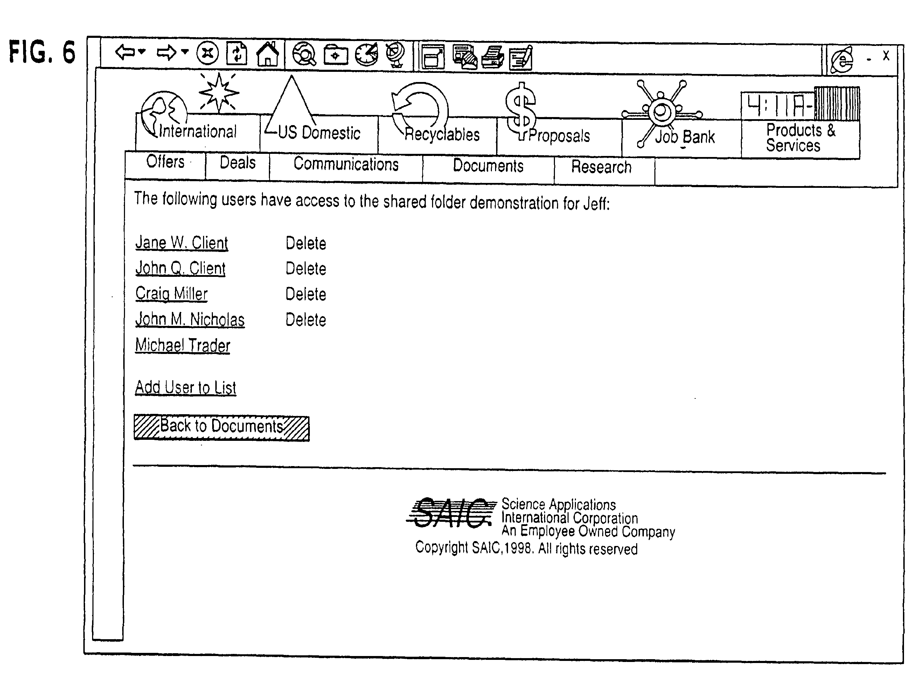

A parameter object P "Shared" displays a hyperlinked page that shows all users with access rights to the document. This page allows a user that places a document in the document manager or a user that has pertinent modify rights, to alter the parties that have access to the document. Also, it allows a user with read-only rights to see the list of users that can access that document. The names of the sharing parties are hyperlinked to invoke the user's email client to allow fast sending of email (which again may be performed server-side without actual transfer) or conventionally or selectively If a folder is shared, the word "Shared" appears to the right of the folder. Clicking on "Shared" brings up the list of person who can access the folder, as shown in FIG. 6. Each name is a hyperlink to detailed contact information.

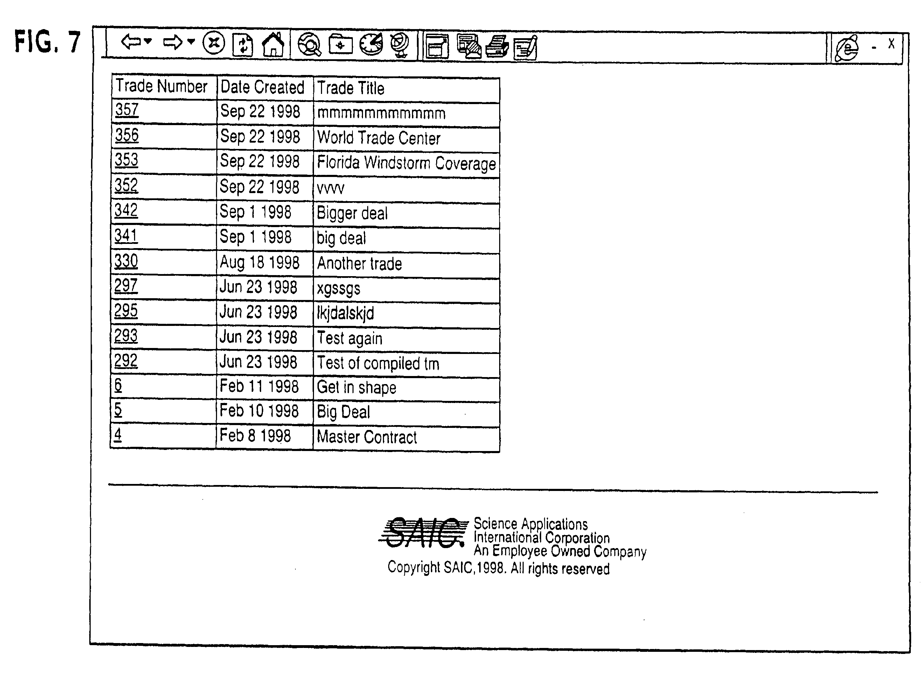

FIG. 7 shows a list of all deals that were completed through the system. The trade number (left column of the grid) is a hyper link to detailed information.

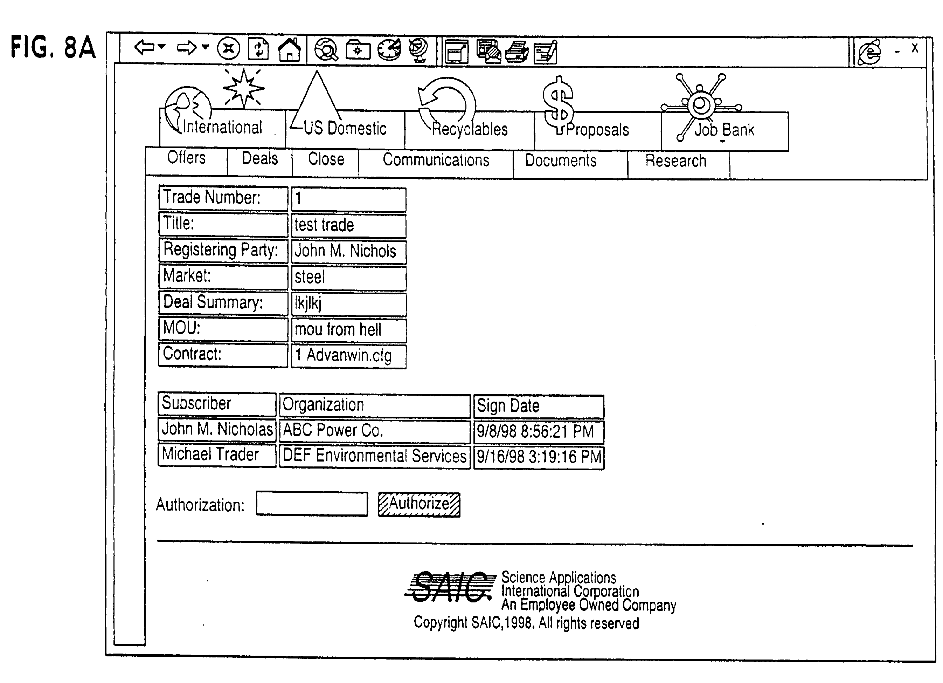

FIG. 8A shows detailed information about a completed trade. It shows the party to the trade, the price or rate, and a description of what was traded. The particular nomenclature is specific to a market. For insurance, for example, price is termed rate, and the summary of a deal is the slip sheet. A complete contract can be attached. Included documents can be downloaded to view on line. The intended signatories to a deal are shown (there can be more than two).

If a signatory has actually signed the document electronically, the date and time are shown. No date and time are shown for parties that have not yet signed. The amount of information displayed on the screen is dependent on the identity of the person viewing the screen. The viewer can be blocked from viewing any information about a deal, or certain fields, such as the contract details or the name of signatories.

Note that the detail screen of FIG. 8A would also show attached exhibits. The FIG. 8A display is the basic device for signing deals. A similar device would be used for signing documents.

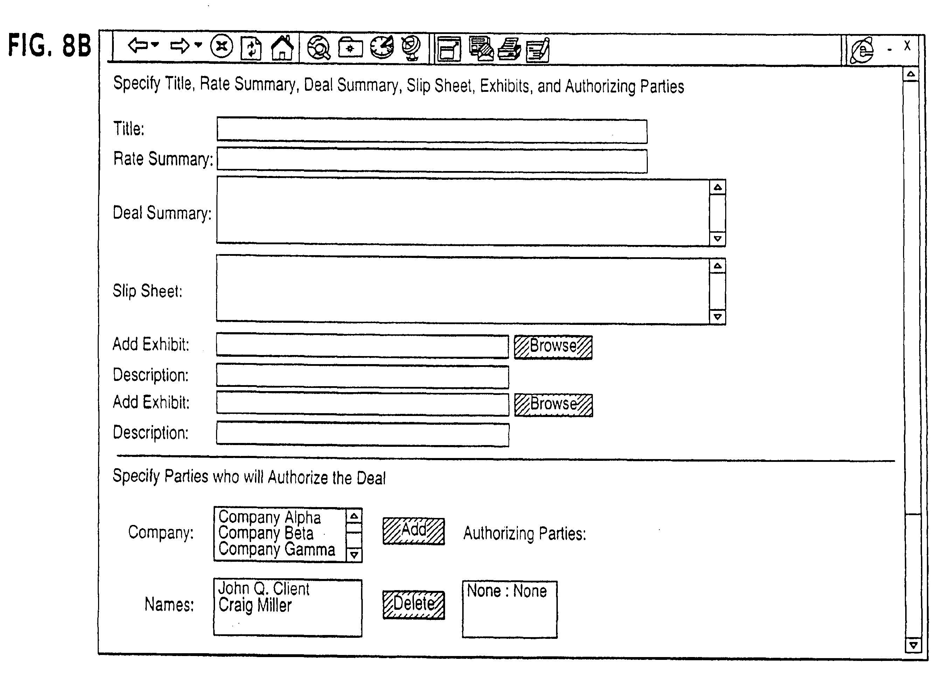

Referring to FIG. 8B, all of the information necessary to document a deal is pulled together through the screen below. The deal summary includes highly structured information on parties, dates, terms, etc., as well as unstructured information in the form of attachments. The bottom part of the page allows the person registering the deal to designate the intended signatories. When the signers affix their electronic signature, they are doing so to all of the documents in the deal, including the attachments. These are archived and protected from tampering using secure hash technology. In this way it is possible to create a reliable, on line electronic signature to a complex deal, without risk of repudiation.

Note that any number of exhibits can be added to the UI device of FIG. 8B since the list scrolls from the bottom each time a second exhibit is added. The user interface has self-explanatory elements for defining information about the deal.

### Anonymous Mail

For purposes of the following description, a "subscriber" is a person or entity that subscribes to an anonymous mail system to be described below. Certain types of negotiations and communications require anonymous initial contact, followed by some period of anonymous discourse, leading to eventual disclosure of the parties' identities. In the course of a typical sale or business deal, the initiating party begins either by contacting one or more targeted potential trading partners or advertising to a community of potential partners. While the identity of the initial offeror is usually clear in any direct contact, it need not be so in advertising. In certain cases it could be problematic for the initiating party to reveal his or her identity:
A party to a deal can have difficulty controlling the method of contact once the party's identity is known. If a company is known to be in the market for office space, for example, the party may be subjected to badgering by real estate firms outside the established bidding process. Executives of the company may be contacted directly in an effort to influence the decision.
Disclosure of intent may adversely affect the market. If a large company begins to acquire land in an area, the price can rise very quickly. Simple exploration of an option can make the option more costly or even impossible.
Disclosure of intent may adversely impact the reputation or standing of a company. An insurance company that determines that it is over exposed to a certain peril (e.g. hurricane losses in the Southeastern U.S.) would reveal that situation to their competitors and investors by a large public solicitation.
While anonymity can be crucial for the initiator of a deal, it can be equally important for the respondent for the same reasons. The need for controlled anonymity has been addressed by several methods that were initially developed for paper communications and have been extended to analogues in telephonic and computer communications.
   - Numbered mail boxes, including government and private
   - Communications through a mediator
   - Anonymous voice mail drops
   - The use of pseudonyms in computer e-mail and dialogs.
      These methods have several serious shortcomings:

   - The method may only allow anonymity from one side.
   - There is no inherent mechanism to validate the credentials and intent on an anonymous party
   - Use of a pseudonym may invalidate its future use by associating the name with a specific party
   - Manually mediated communications are slow
   - The creation and deletion of pseudonyms may not be completely within the control of the party, imposing an overhead cost (in cash or labor) and/or delay in creating a new name
   - In most systems, a person with multiple pseudonymous mailboxes or e-mail addresses will receive communications in several different places (mailboxes or accounts), thus requiring multiple logons/passwords.
   - Routing of messages received anonymously requires manual forwarding to all relevant parties by the individual with access to the anonymous mail box or email account.
   - There is no mechanism to reveal actual identities in a secure and mutually acceptable way.

The present invention addresses these deficiencies by providing two-way anonymous communications, a central point of collection for messages sent to multiple pseudonymous addresses, connection of multiple parties to a single anonymous account, and a mechanism to reveal identities to all parties to a deal simultaneously, by mutual consent. In summary, the anonymous mail system is a server side system that allows clients to create anonymous handles on the fly. It also allows them to share anonymous handles among multiple recipients so that the group of recipients appears as a single recipient to the sender using the anonymous handle. It is like a transparent mailing group. When mail is sent to an anonymous handle, it is sent to all members of the group.
Multiple Systems - In contrast to the first-generation anonymous mail system, the present system allows for multiple anonymous mail (Amail) systems. Each Amail system operates in association with a conventional e-mail server, and uses the e-mail server for communications with non-subscribers, subscribers to Amail systems other than the local one, and for forwarding messages to the subscribers Email client software.
Registration - Subscribers to an anonymous mail system (Amail) each complete a registration that provides:
- Contact information (name, address, telephone number, fax, etc.)
- Information to determine whether they the party is qualified to participate in the communications exchange. For example, if the system were to be used between and among real-estate agents, registrants to the system might be required to supply a real estate license number.
- Association with an organization (if appropriate)
- Additional information on the individual or organization that may be of use to others in the Amail system to determine the suitability of the party as a partner in negotiations.
The additional information can include such factors as credit ratings, assets, or the region in which the company does business. The specific information required depends on the application. Insurance, real estate, energy marketing, etc. would all have different data of interest.
Validation - Depending on the business model and role of the organization operating the Amail exchange, the organization can either accept the information provided by the subscriber, or verify the information and provide verification as part of the service. Upon acceptance of a subscription applications and validation of the background information if necessary, the use is assigned an Amail user ID and password.

In the first version of the Amail system, logon was automatic from the general application (CATEX); there was no separate user ID and password. In alternative versions, the Amail system can provide its own user ID and password, with the ability to bypass logon when it accessed from other applications with acceptable user validation. All of the actual contact information and validation information are maintained in a database. Validation information was not provided in the first version of CATEX.
Assignment of an Email address - Each subscriber must provide an Internet accessible Email address or be assigned an e-mail address in the Amail system. The first version of the Amail required that the user have an Email address on the system. The new version works directly with e-mail systems other than the Amail.
Logon - Subscribers access the Amail system by connecting an Amail web page provided either over the Internet or on an Intranet. The subscriber enters a user name and password. The first version of Amail was not browser-based and worked only over a LAN or WAN, not over the Internet or an intranet.
Available functions - After logon, the subscriber can access the following functions: -
- Manage aliases
- Compose an anonymous message
- Read Amail messages. In the original CATEX system, the user could not access messages from within the Amail application.
- Log off
Managing Aliases - Aliases are directly under user control. After logon, a user can:
- Add a new aliases
- Delete an existing alias
- Create a free-form note associated with a new alias, or edit the note for an existing alias that will be accessible to recipients from the alias.
- Identify other subscribers to whom messages to alias should be forwarded
- Identify other subscribers with permission to generate messages from the alias These last two features make it possible for a group of subscribers to share an alias, allowing them share communications and work together more effectively. The user will:
Compose an anonymous message - After logon, a user can create and send an anonymous message. After the option is selected, the system will display a message creation screen with the following features:
1. A list of aliases currently owned by the user (i.e. created by the user and not deleted), for the user to select the alias from which the message will originate.
2. A subject box for the mail.
3. A list of the e-mail and alias addresses to which messages can be sent for the user to select one or more. The original version could only send to one alias. The user can also supply an Internet e-mail address off system.
4. A list of the e-mail and alias addresses to which copies of the messages can be sent for the user to select one or more. The user may also supply an Internet e-mail address off system. The original version did not include a "CC" feature.
5. A space where the message can be typed, allowing for users to paste text copies form another system using the Windows-based clipboard utility.
6. A check box to select whether the sender is willing to reveal his identify to the recipient on mutual consent.
7. A check box to select whether the copies of the message should be sent to other subscribers who share the Alias. The original version allowed only one subscriber to access an alias.
Delivery of Messages- After an Amail message has been composed (see step 7), it is delivered as follows.
1. The body of the email message is modified by adding a header including routing information and an indication of whether the sender is willing to reveal identities if there is reciprocal concurrence. The message would appear as shown below. The items in italics are new since the original (prior art) version. The first generation of the anonymous mail system did not allow for communications between multiple Amail systems and, hence, did not list the Amail system name in the list of respondents. The first generation system also did not allow for multiple recipients. 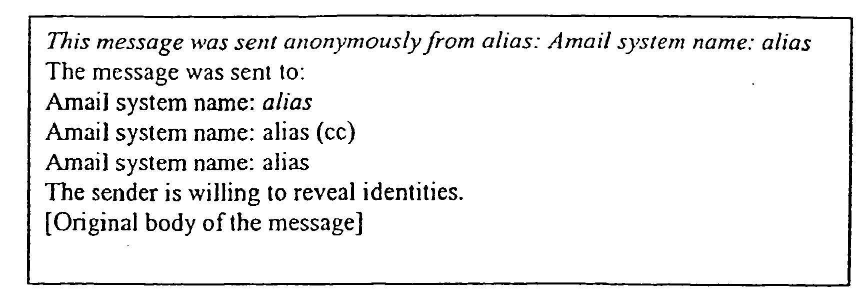
2. If the message is sent to a specific, non-anonymous e-mail address, Amail composes and transmits a standard Email message. The sender is listed as "amail.admin.alias@xxxxx" where "xxxxx" is the address of the standard mail server supporting the mail system. Off-system access was not a feature of the first version.
3. If a message is sent to an alias on the local or any other related Amail system, and the owner of the alias has an off system email address, a message is sent as in step I, above. In addition, however, the message is stored in an Amail message database for access through the Amail system interface. The original version did not have an Amail message database.
4. If a message has been sent to an alias for which there is no associated conventional mail account, the message is stored in the Amail message database. The Amail message database contains a repository for all messages, listing the subscriber(s) associated with the alias to which the message was addressed. The database contains the message (including sender, addressees, and ccs), date and time of transmission, and the alias of the subscriber to which the message was sent. The original version did not have an Amail message database.
5. If the option was checked to send copies to other that share the alias (see above), copies of the message are placed in the message database for the subscribers associated with each of the aliases.
Receipt of Messages - Messages sent from the Amail system can be received in a standard e-mail client by Amail subscribers and non-subscribers.

Amail subscribers can also receive messages through an Amail reader interface. All messages received are placed in the Amail message database (see above). Since an alias can be associated with more than one subscriber, the Amail message database can list more than one subscriber as an "owner" of the message even if it was sent to only one alias. When a user logs on and selects the option to read Amail messages (see above) the messages are rendered as an HTML page through a browser. Messages to all of the aliases associated with the user are displayed. Each message has a hotlink to respond to send a message back to the sending alias. Each message also has a link to display the background and validation information and note associated with the alias (see above). The original version did not provide an Amail viewer nor did it provide for display of validation information. Responding from off System from Amail - Individuals from off system can respond to Amail messages using the standard reply feature of their mail server. Messages will be returned to the reply address (see above). Messages received by the conventional e-mail server supporting the Amail system will forward the message to the Amail message repository for the alias listed in the return address. Responding from a standard Email client was not provided in the original version.

### Flip Widget

Increasingly, computer applications are delivered through browsers over the Internet or an intranet. There are many design considerations in building a system for browser delivery in contrast to delivery as conventional client server application. Two related considerations are the graphic richness of a browser screen and the time lag to render a new screen. Partly because good web pages contain complex graphics and partly because the Internet can be a relatively slow network, it is important to design a web application to make few unnecessary wholesale screen changes. It is more economical from the perspective of data transmission and, hence, from response time, to create a "flat" rather than "deep" hierarchy of screens, and change only the part of a screen that is minimally necessary.

For example, it is better in a data query to provide a single screen that allows a user to specify a state and city within the state than to provide a first screen for the state, followed by a second screen for the city. As the function of screens becomes more complex, however, it becomes an increasingly difficult challenge to fit all of the options onto the screen (particularly when a user selects a lower screen resolution) and while maintaining a clean appearance. The invention described here provides a tool that allows the Internet application developer to display an effectively unlimited number of options in a very small space using a very familiar and intuitive display feature.
Appearance - The "Flip Widget" tool renders a graphical object representing two rows of file folders, overlapping. The labels on the front row are visible, the labels on the second row are obscured by the front row of tabs, but the edges of the apparent back tabs are visible. The number of the apparent tabs displayed in each row is a function of the screen resolution and the length of the longest label entered by the user.
The Flip Tab - In one embodiment, the rightmost tab on the front row is labeled "FLIP". When a user actuates this tab, the response is as described below. Database of labels and links - In creating the display, the application programmer enters a set of paired values. Each pair consists of (1) text of the label to be displayed and a tab, and (2) the name of an HTML link, either within or external to the page to be rendered when the tab is selected.
Action - Upon rendering a page containing the flip widget, the two-row tab display shows the first "n" options from the list of labels and links. The value of "n" represents the maximum number that can be displayed while allowing room for the flip tab. Upon clicking any of these tabs, the corresponding link is executed. Upon clicking the flip tab, the two-row tab display is changed to reflect the next "n" options from the list of labels and links, retaining the flip tab on the right. If there are fewer than n options remaining, the flip widget will either display the last n options, or whatever number remain supplement by as many options are needed from the start of the list. Clicking the flip tab when the list has been completed starts the cycle over again with the first option.

Referring to FIGS. 9 and 10, a flip widget in a first state is shown in FIG. 9. In the first state, any of the tabs A through E can be selected and the corresponding set of controls displayed. For example, in FIG. 9, tab B has been selected and the controls 430-432 are displayed. If the flip tab 410 is selected, a next row of tabs is brought forward so that the display appears as in FIG. 10 with tabs F through J showing. In FIG. 10, tab G has been selected and the corresponding controls 435-437 are displayed.

FIGs. 9A and 10A show a more detailed example of how a flip widget can be used to organize functions available to a user. For example, suppose that one application is a commodity futures trading system that permits a user to execute trades, review prices, and obtain other information relating to various metals such as gold, silver, and platinum. As shown in FIG. 9A, for example, controls or functions 430, 431, and 432 (e.g., execute a trade, review current prices, and the like) are associated with a "gold" category and can be invoked easily when that category is at the forefront of the flip widget as shown. Clicking one of the other tabs (e.g., silver tab 400) would bring the functions associated with that category to the forefront while allowing the user to readily select other categories visible behind the front. Clicking "other markets" tab 410 would change the selection of front-row tabs to a different set of categories, as shown in FIG. 10A. The "other markets" tab 410 could be continually clicked to rotate through a plurality of groupings of markets, each having a set of functions or controls associated therewith.

A flip widget can be implemented in conjunction with the first or second embodiments of the present invention in order to permit many different functions to be displayed in a small screen space. The flip widget is a device to organize many different functions in a logical way, and can be used as a tool for building an interface to multiple applications. As one example, in a DCE (described in more detail below), there may exist n functions (e.g. bulletin boards, chat rooms, e-mail, a-mail, transaction engines, and the like) the specific availability of which can be defined by a user who creates the collaborative environment. This collection can change over time. Accordingly, the interface cannot be "hard coded" for a particular user.

One way to represent an indefinite (and potentially large) number of functions in a small space is with tabs resembling a file folder, with a graphic element representing hidden cards, implying that the user can reach the functionality on the cards by paging (i.e. flipping) to them. The flip widget makes it possible to provide a link to a list of applications maintained in a database rather than requiring that they be hard coded. Programming logic for storing folder labels in a database, linking those labels with associated functions and activating them using browser-type buttons, and for performing the display features described above, are conventional and no further elaboration is necessary. Although the "flip widget" provides one method of structuring a user interface to structure a user's view of application functions, other methods can of course be used.

### B. DYNAMIC COLLABORATIVE ENVIRONMENT EMBODIMENT

In a second embodiment of the invention, a dynamic, user-defined collaborative environment can be created in accordance with a set of tools and method steps. As explained previously, this system differs significantly from conventional networked environments in that: (1) the environment (including access and features) is user-defined, rather than centrally defined by a system administrator; (2) each environment can be easily destroyed after completion of its intended purpose; (3) users can specify a group of participants entitled to use the environment and can define services available to those participants, including offering participation to unknown potential users; (4) the networked environment (including access features and facilities) can cross corporate and other physical boundaries; and (5) the environment offers a broad selection of tools that are oriented to communication, research, analysis, interaction, and deal-making among potential group members. Moreover, in a preferred embodiment, the environment is implemented using web browser technology, which allows functions to be provided with a minimum of programming and facilities communication over the Internet.

FIG. 11 shows various method steps that can be carried out to define, create, and destroy an environment according to a second embodiment of the invention. The term "environment" as used herein refers to a group of individuals (or computers, corporations, or similar entities) and a set of functions available for use by that group when they are operating within the environment. It is of course possible for one individual to have access to more than one environment, and for the same functions to be available to different groups of people in different environments.

The process of creating a collaborative environment involves the migration of tools and information resources available in the library of the environment generator into a specific collaborative environment. The collaborative environment can include / link to any application available to the environment generator. It can also include applications specific to the environment provided that theses are accessible through Internet protocols.

Underlying the environment is a directory of users, information about users, and their authorities. The core structure for the environment user database should conform to a directory standard - typically DAP (Directory Access Protocol) or LDAP (the lightweight directory access protocol). The environment generator has access to its own directory of users and to the user directories of the environments it has generated. The directory of an environment can be populated initially by selecting users from the environment generator's directories. These are added to the directory of the environment in one of two ways depending on the specific implementation. Directory records can be copies from the environment generators user database to a separate database for the environment or a flag can be added to the user data record in the environment generators users database to indicate that the user has access to the environment. The second, simple model is useful when all users in an environment have equal authority. A separate user database (directory) is necessary for an environment when the environment has its own security / authority model.

Additional members can be added through a set of standard application / subscription routines. These then become known to the environment generator (as well as the specific environment) providing the foundation for greater speed and efficiency in creating subsequent environment.

Beginning in step 1101, a new group is created by identifying it (i.e., giving it a name, such as "West High School Research Project," and describing it (e.g., providing a description of its purpose). The process of creating a group and defining functions to be associated with the group can be performed by a user having access to the system without the need for system administrator or other similar special privileges (e.g., file protection privileges, adding/deleting application program privileges, etc.). In this respect, environments are, according to preferred embodiments, completely user-defined according to an easy-to-use set of browser-driven user input screens. The principles described herein are thus quite different from conventional systems in which a central system administrator in a local area network can define "groups" of e-mail participants, and can install application programs such as spreadsheets, word processing packages, and the like on each computer connected to the network. Moreover, according to various preferred embodiments, the facilities provided to group members can be provided through a web-based interface, thus avoiding the need to install software packages on a user's computer.

It is also contemplated that various methods of obtaining payment for creating or joining groups can be provided. For example, when a new environment or group is created, the person or entity creating the group can be charged a fixed fee with payment made by credit card or other means. Alternatively, a service fee can be imposed based on the number of members that join, the specific functions made available to the group, or a combination of these. Moreover, fees could be charged to members that join the group. The amount of the fee could also be based on the length of time that the environment exists or is used.

Although not specifically shown in FIG. 11, step 1101 can include the step of creating a new entry in a database table (e.g., a relational or object-oriented database) to store information concerning the new group and the environment in which the group will operate. Database entries related to the group, including some or all of the information described below, can be created as the environment is defined. It is assumed that one or more computers are linked over a network as described in more detail below in order to permit the environment to be created, used, and destroyed, and that a database exists on one or more of these computers to store information concerning the environment.

In step 1102, the group members are identified. According to various embodiments, the group members can be identified in three different ways (or combinations thereof), as indicated by sub-steps 1102a, 1102b, and 1102c in FIG. 11. It is contemplated that group members can span physical networks and computer systems, such as the Internet. Consequently, group members can include employees of different corporations, government agencies, and the like. In contrast to conventional virtual private networks, both the group members and the functions made available to those group members are entirely user-selected, thus permitting a broad range of persons to easily create, use, and destroy virtual private networks and associated functionality.

First, in step 1102a, group members can be identified by selecting them from a list of known users that are to be included in the group. For example, within a corporation or similar entity, a list of internal e-mail addresses can be provided, or an electronic version of a phone list or other employee list can be provided. If the hosting computer system is associated with a school, then a list of students having accounts on the computer (or those in other schools that are known or connected to the host) can be provided. From outside a corporate entity, users can be selected based on their e-mail addresses (e.g., by specifying e-mail addresses that are accessible over the Internet or a private or virtually private network). In this step, the environment creator specifies or compels group members to belong to the group.

Second, in step 1102b, group members can be invited to join the group by composing an invitation that accomplishes that purpose. For example, a group creator may choose to send an invitation via e-mail to all members of the corporation, or all members of a particular department within the corporation, all students in a school or region, or members of a previously defined group (e.g., the accounting department, or all students in a particular teacher's class). The invitation would typically identify the purpose of the group and provide a button, hyperlink, or other facility that allows those receiving the invitation to accept or decline participation in the group. As those invited to join the group accept participation, their responses can be stored in a database to add to those members already in the group. Invitations could have an expiration date or time after which they would no longer be accepted. As invitees join the group, the group creator can be automatically notified via e-mail of their participation.

Third, in step 1102c, group members can be solicited by way of an advertisement that is sent via e-mail, banner advertisement on a web site, or the like. Persons that see the advertisement can click on it to join the group. It is also possible for advertisements to have a time limit, such that after a predetermined time period no more responses will be accepted. The primary difference between advertising participation in a group and inviting participation in a group is that invitations are sent to known entities or groups, while advertisements are displayed to potentially unknown persons or groups.

It will be appreciated that group members can be selected using combinations of steps 1102a, 1102b, and 1102c. For example, some group members can be directly selected from a list, while others are solicited by way of invitation to specifically identified invitees, and yet others are solicited by way of an advertisement made available to unknown entities.

In step 1103, the functions to be made available to the group are selected. For example, the group can be provided with access to an auction transaction engine; a survey tool; research tools; newswires or news reports; publication tools; blackboard facilities; videoconferencing facilities; and bid-and-proposal packages. Further details of these facilities and tools are provided herein. The group creator selects from among these functions, preferably by way of an easy-to-use web browser interface, and these choices are stored in a database and associated with the group members. Additionally, the group creator can specify links to other web-based or network-based applications that are not included in the list by specifying a web site address, executable file location, or the like. The group creator can also define shared data libraries that will be accessible to group members.

In step 1104, the environment is created (which can include the step of generating a web page corresponding to the group and providing user interface selection facilities such as buttons, pull-down menus or the like) to permit group members to activate the functions selected for the group. In some embodiments, access to the group may require authentication, such as a user identifier and password that acts as a gateway to a web page on which the environment is provided. Other techniques for ensuring that only group members access the group functions and shared information can also be provided. A web page can be hosted on a central computer at an address that is then broadcast to all members of the group, allowing them to easily find the environment.

In step 1105, group members collaborate and communicate with one another using the facilities and resources (e.g., shared data) available to group members. In the example provided above, for example, a group of high school students collaborating on a school research project could advertise for survey participants; conduct an on-line survey; compile the results; communicate the results among the group members; brainstorm about the results using various brainstorming tools; conduct a videoconference including group members at various physical locations; compile a report summarizing the results and exchange drafts of the report; and publish the report on a web site, where it could optionally be offered for sale through the use of an on-line catalog transaction engine. The group could even contact a book publisher and negotiate a contract to publish the report in book form using bid and proposal tools as described herein.

In step 1106, after the environment is no longer needed, it can be destroyed by the person or entity that created the group. Again, in contrast to conventional systems, the destruction of the environment is preferably controlled entirely by the user that created the environment, not a system administrator or other person that has special system privileges. Destruction of the environment would typically entail deleting group entries from the database so that they are no longer accessible.

FIG. 12 shows one possible system architecture for implementing the steps described above. As shown in FIG. 12, an Internet Protocol-accessible web server 1201 is coupled through a firewall 1202 to the Internet 1203. The web server includes an environment generator 1201 a which can comprise a computer program that generates user-defined environments as described above. Further details of this computer program are provided herein with reference to FIG. 21.

Web server 1201 can include an associated system administrator terminal 1204, one or more CD-ROM archives 1205 for retaining permanent copies of files; disk drives 1206 for storing files; a database server 1207 for storing relational or object-oriented databases, including databases that define a plurality of user-controlled environments; a mail server 1208; and one or more application servers 1209 that can host application programs that implement the tools in each environment. Web server 1201 can also be coupled to an intranet 1210 using IP-compatible interfaces. Intranet 1210 can in turn be coupled to other application servers 1211 and one or more user computers 1212 from which users can create, participate in, and destroy environments as described herein, preferably using standard web browsers and IP interfaces. Web server 1201 can also be coupled to other user computers 1217 through the Internet 1203; to additional application servers 1215 through another firewall 1216; and to another IP-accessible web server 1213 through a firewall 1214.

It will be appreciated that the system architecture shown in FIG. 12 is only one possible approach for providing a physically networked system in which user-defined network environments can be created and destroyed in accordance with the principles of the present invention. It is contemplated that application programs that provide tools used in a particular user-defined environment can be located on web server 1201, on user computers 1217, on application servers 1215, on application servers 1209, on application servers 1211, or on any other computer that provides communication facilities for communicating with web server 1201. It will also be appreciated that web pages that provide access to each user-defined environment need not physically reside on web server 1201, but could instead be hosted on any of various computers shown in FIG. 12, or elsewhere.

Reference will now be made to exemplary steps and user interfaces that can be used to carry out various principles of the invention, including steps of creating a group, selecting group members, and defining functions to be made available to group members in the environment.

FIGS. 13A through 13C show one possible user interface for creating a group and identifying group members. In FIG. 13A, a user gains access to an environment creation tool by way of an authentication process. This may be a simple username and password device as shown in FIG. 13A, or it could be some other mechanism intended to verify that the user has access to the environment creation tool. In the case of a corporation, school, or other entity that already provides a log-in procedure to access the entity's network, such log-in procedure could serve to authenticate the user for the purpose of creating a new environment. It should be appreciated that user authentication is not essential to carrying out the inventive principles. Moreover, although it is contemplated that for ease of use (and to minimize programming) web browsers and web pages be used to receive user-defined information to create each environment, other approaches are of course possible.

In FIG. 13B, the user is prompted to create a new group by supplying a group name (e.g., "Joe's Homework") and a brief description of the group. This information is preferably stored in a database file and associated with group members and functions available to those group members.

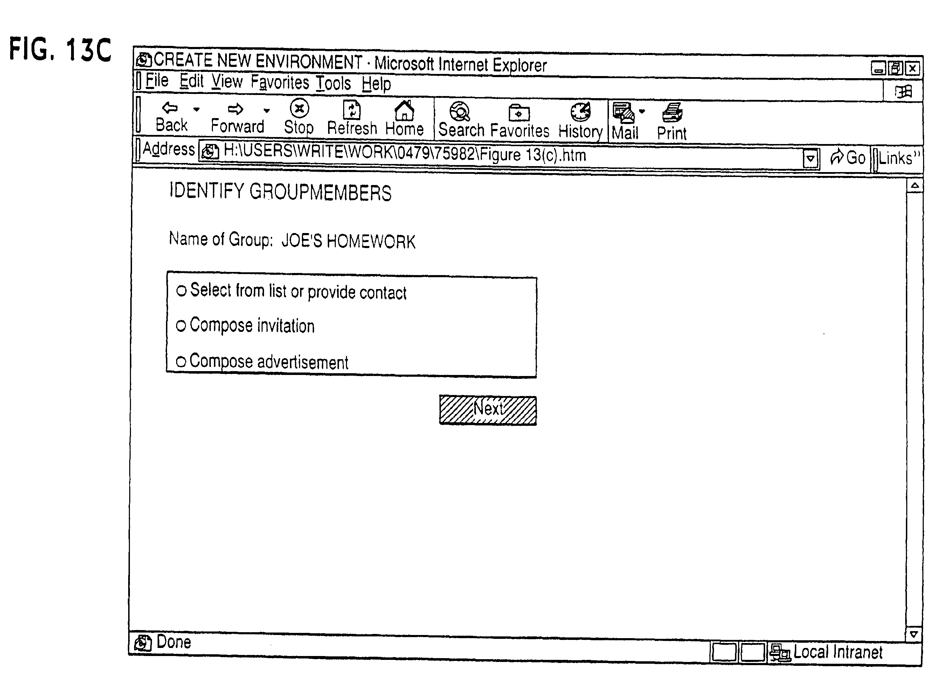

In FIG. 13C, the user is prompted to identify group members. As described previously, group members are preferably identified in one of three ways (or combinations of these): (1) selection from a list of known group members; (2) inviting known candidates to join the group; or (3) advertising for new members. When the user clicks one of the options in FIG. 13C, he or she is prompted to supply additional information as shown in FIGS. 14A through 14C.

Beginning with FIG. 14A, for example, group members can be individually specified by entering an e-mail address (e.g., an internal or external e-mail address) in a text form data entry region and/or by selecting from a previously known list. This screen permits the user to compel attendance in the group by specifying names and/or e-mail addresses to which group messages will be sent. All those added to the group in this manner will be provided with access to the environment corresponding to the group. Aliases and pre-defined groups could also be specified as the basis for membership (e.g., all those in the accounting department of a corporation, or all students in a high school).

Each member of a group might have a group email account, or they may use an off-system email account. Off-system email addresses can be maintained in a database of users. Mail sent to the group email address is preferably forwarded off-system, protecting the actual email address of the person unless that person wishes to give out that address. New members can be added until the group is completed. Although not explicitly shown in FIG. 14A, it is contemplated that new members can be added to a previously defined group after the environment has already been created.

When group members are selected or specified, the user creating the environment can also create a password for each user in the group in order to enable those in the group to access the environment. Alternatively, when a user visits the environment, the environment can retrieve a "cookie" from the user's computer to determine whether the user is authorized to access the environment. If no cookie is available, the user could be prompted to supply certain authentication information (e.g., the company for whom he or she works, etc.) In yet another approach, authentication could occur by way of e-mail address (i.e., when the user first visits the environment, he or she is prompted to enter an e-mail address). If the e-mail address does not match one of those selected for the group, access to the environment would be denied.

Turning to FIG. 14B, prospective group members can also be "invited" to join the group. The user creating the environment can specify one or more e-mail addresses to which an invitation will be sent. The invitation can be a simple text message, or it could be a more sophisticated video or audio message. An expiration date can also be associated with the invitation, such that responses to the invitation received after the date will not be accepted. Software resident in web server 1201 (FIG. 12) receives responses to the invitations and adds members to the appropriate group or drops them if the expiration date has passed or the prospective group member declines participation. Prospective members can join the group by sending a reply with a certain word in the message (e.g., "OK" or "I join"); by clicking on a button in an e-mail message; or by visiting a web site identified in the invitation.

Turning to FIG. 14C, group members can also be solicited by creating an advertisement directed primarily at potential group members that are unknown. The advertisement could include, for example, a banner ad comprising text, video, and/or audio clips. The graphic should conform to the size designated for the ad on the web page. The ad could be posted on a web site by uploading the graphic through a web interface and, optionally providing a URL on the screen of FIG. 14C to link to if the advertisement is clicked. Software on the group page can render advertisements on a page either (a) every time the page is displayed, (b) in rotation with other ads; or (c) when characteristics of the user match criteria specified for the ad.

The advertisement can include an expiration date after which responses would no longer be accepted. Advertisements could range from the very specific (e.g., an advertisement posted on a school's home page advertising participation in Joe's research project on drug use at the school) to more general (e.g., an advertisement that says "we're looking for minority contractors looking to establish a long-term relationship with us" that is posted on web sites that cater to the construction industry.

A qualification option can also be provided to screen prospective group members. For example, if an advertisement seeks minority contractors to participate on a particular construction project, selecting the "qualify" option would screen responses by routing them to the user that created the group (or some other authority) before the member is added to the group. Those responding to the advertisement could be notified that they did not pass the qualifications for membership in the group, or that further information is required (e.g., documents evidencing qualifications) before participation in the group will be permitted. Alternatively, an automatic qualification process can be provided to allow a prospective member to join if the person fills in certain information on the response (e.g., e-mail address, birthdate that meets certain criteria, or the like).

As shown in FIG. 15, a banner ad displayed on a web site invites minority contractors to join a group that bids on information technology contracts. Those interested in the advertisement click a button, which leads them to another site (not shown) requiring that they provide certain information (qualification information, name, age, company registration information, etc.) This information is then forwarded to web server 1201 which either pre-screens the information according to pre-established criteria, or notifies the user creating the group that a prospective member has requested access to the group. In the latter case, the user could screen the applicant and grant access to the group.

FIG. 16 shows one possible user interface for selecting communication tools to be made available to group members. This screen can be presented to the user creating the environment after the group has been identified and its members selected. It is contemplated that a variety of communication tools can be provided, including a bulletin board service; advertisements; white pages (e.g., a listing of members, their e-mail addresses, telephone numbers, and the like); yellow pages (e.g., a listing of services or companies represented by group members, with promotional and contact information); document security (e.g., shared access secure document storage services); anonymous e-mail (described above with respect to the first embodiment); threaded dialogs; a group newsletter creation tool; videoconferencing; and even other user-provided applications that can be specified by name and location (e.g., URL). Details of these services are provided below.

According to various preferred embodiments, dynamic collaborative environments are designed to integrate tools from multiple sources provided that they are web-accessible (i.e., they operate according to Internet Protocol and/or HTML-type standards). The categories listed above provide a reasonable taxonomy of the tools necessary for collaboration, but this list can be extended to include virtually every class of software such as computer-assisted design, engineering and financial analysis tools and models, office applications (such as word processing and spreadsheets), access to public or proprietary databases, multimedia processing and editing tools, and geographic information systems. The following describes some of the communication tools that can be provided:

Bulletin boards. A bulletin board (see, e.g., FIG. 2) lists notices posted by group members, which may be offers to buy or sell, but need not be limited to such offers. Many types of bulletin board services are of course conventional and no further discussion is necessary in order to implement one of these services. Nevertheless, in one embodiment the following data items (attributes) can be provided for each notice appearing on the bulletin board: an item number, a title, the date posted, and one or more special attributes defined by the user. The attributes may include a field to indicate whether a listing is a "buy" or "sell " offer. The board can be provided with an integrated sorting capability. By clicking on the heading of each column, the user can sort the entries in, alternately, ascending or descending order. Thus, it is possible to organize the records from oldest to newest or newest to oldest, or to separate buy and sell offers. To limit the values on a board, a search capability can also be provided, such that only those entries that meet the search criteria are displayed.

Advertisements. In a typical environment of a dynamically created network there are a number of fixed places for advertisements - the top of a page for a banner, the bottom of a page for a banner, and space on the side for small ads. The creator of the environment may choose to use none, any, or all of these spaces for advertisements. Once a space is designated for advertising, group members may place adds by completing a template that provides payment information (if required), the text for the ad (any standard image format), and a link to be executed if the ad is clicked by someone viewing the ad.

Each user is responsible for providing functionality behind the link. The ad may be displayed persistently (every time a page is displayed), in rotation with other ads for the same place, or may be triggered on the basis of user characteristics including purchasing history. Revenue can be collected for placement (fixed price regardless of how many times an ad is displayed), per time that the ad is displayed, or per click on the ad. The virtual private network provides the front-end to facilitate online placement of the ad. Display can be done by linking pages to standard ad display code, available off the shelf from several sources. This code provides for rotation of the ads. Software for customization (i.e. choosing the ad based on user characteristics) is available commercially from several sources.

White pages. White pages provide a comprehensive listing or directory of members with information about them and information regarding how to contact them. Various types of commercially available software can be used to manage such directories, and it is elementary to code typical directories that have fixed contents for each member.

A web-accessible directory can be used in accordance with various embodiments of the invention. One type of directory that can be provided differs from directories having fixed structures. The key differences are as follows:
(a) User control over information Users enter and maintain their own information directly, rather than through a central organization. This provides more immediate update of data and reduces transcription errors. It makes it simple, for example, for people to change their phone number when they are temporarily working at another location.
(b) Multiple points for quality control. The data regarding each user can be displayed to the user periodically (e.g.30, 60, and 90 days), and the user prompted to update and verify the data. A feedback capability can be provided for members of a group to report errors they find. Email addresses can be "pinged" periodically to determine if they still exist. In addition, server management staff can periodically review accounts that have had recent activity.
(c) Object structure. A directory entry consists of a collection of data elements. These elements include such things as name for addressing (Dr. John D. Smith), sort name (Smith, John D), or primary work telephone (800-555-1212). Traditional mail systems have a fixed number of rigidly formatted elements. In one embodiment, a more flexible approach can be used in that individuals identify which elements they wish to add to the collection comprising their directory entry. For example, a person can add 3, 4, 5 or more telephone numbers attaching a note to each explaining its use (e.g. "for emergencies after 8PM").
(d) Direct link to communications tools. Where a directory refers to a contact method (e.g. a telephone number), the method can be invoked directly from an entry if the necessary software is available. For example, phone number can be dialed, email messages initiated, or a word processing session initiated with letter and envelope templates, preloaded with address information.
(e) Descriptive information. In addition to contact information, each directory can contain information describing the entry (individual or business). The description can be different in each group or it can be the same. The descriptive is free form, with the exception that the user may drop in terms from a group-specific lexicon. This lexicon can include terms specific to the industry (e.g. "fuel system") for the automotive industry, or preferred forms of standard terms (e.g. "California" rather than "CA", "Ca", or "Calif."). Standardization of terms in this way makes search the directory more reliable.

Yellow pages. Conventional "yellow pages" products provide a one level classification of directory entries designed to facilitate identification of and access to an individual or organization with specific interests and capabilities. Within industries, and particularly online, multi-level hierarchical directories are common, with the multiple levels providing more precise classification. There are numerous commercial products for maintaining online yellow page type classification systems.

Any web-accessible directory can be connected to a DVPN group. A preferred method offered with the system integrates the classification system with the descriptive field in a directory entry. Every time a standard term pertaining to a classification is pulled from the lexicon, the entry is added to that classification in the hierarchical sort. In addition to hierarchical access, this correspondence between the traditional hierarchical sort and the free-form description with standardized terms makes it possible to access records via search rather than browsing the hierarchy. Searching makes it possible to identify an organization with multiple capabilities (e.g. "brake repair" and "frame straightening"). This search capability is much like a general web-search using a tool like AltaVista's or Inktomi's search engine and can use the same search engine, but differs in that material being search is in a precisely defined domain (group members), the information being searched is limited and highly quality controlled (i.e. group directory entries), and has a precision rooted in a precise vocabulary (the lexicon used in preparing the description).

Document repository. Any commercial web-enabled document repository can be integrated into a group. Examples are Documentum and PC DOCs. An improved version offered specifically with the DVPN package was described above.

Document security. Within the document repository various tools can be provided to protect the security of documents. These include (1) limiting access to a document to certain people or groups; (2) only displaying the directory entry for documents to people who can access it; (3) password protection; (4) encryption; (5) secure archive in read only mode on a third-party machine; (6) time-limited access and (7) a secure hash calculation.

All of the above are conventional except for time-limited access and the secure hash calculation. Software for limiting access to a document to a certain period is available from Intertrust, among others. A secure hash is a number that is characteristic of the document calculated according to a precisely defined mathematical algorithm. There are several secure hash algorithms, and implementers can develop their won. They are "trap door" in nature. That is, the calculation can be performed with reasonable effort, but the inverse of the function is computationally intractable. The classic example of a trap door function is multiplication of very large prime number (on the scale of hundreds of digits). The product can be calculated with relative ease, but factoring the product (the inverse function) is very time consuming, making if effectively impossible with generally available hardware. This method is used in public key encryption, but can be applied equally well in secure hash, though other trap door functions are preferred, in particular, the one specified by the U.S. Department of Commerce as FIPS standard 180. Code to implement this standard can be developed from published algorithms.

Anonymous e-mail (described above with respect to the first embodiment);

Threaded dialogs. Threaded dialogs are a collection of messages addressing a specific topic, added serially, not in real time. They are threaded in the sense that new topics can branch off from a single topic, and topics can merge. According to one embodiment, threaded dialogs differ from conventional news group functionality in that (1) users can initiate new topics; (2) users can post a message to one topic, then indicate that the message pertains to other topic as well; (3) browsers reading a message may continue down the original thread or one of the alternates if other topics are suggested.

Group newsletter creation tool. A newsletter creation tool can be used to link columns provided by multiple users (and maintained as separate web documents) into a whole through an integrating outline maintained by an "editor". The purpose of the tool is to provide the look and feel of an attractive single document to a disparate collection. To create the newsletter the editor generates an outline identifying an author for each component and a layout. Art for the first page can be provided. Through messaging, the authors are provided a link to upload their content. Content is templated to include a title, date, a by line, one or more graphic elements, a summary for the index, and text. The editor may allow documents to go directly to "publication" or require impose a review and editing step.

Chat groups. Real time chat room software is widely available from many sources including freeware and shareware.

Audio and videoconferencing. Commercially available tools for web-based audio and video conferencing can be included in the group functionality. Examples are Net Meeting and Picture Tel software.

FIG. 17 shows one possible user interface for selecting research tools to be made available to group members. As shown in FIG. 17, various tools such as a mortgage calculator, LEXIS/NEXIS access, news services, Valueline, and other research tools can be provided by checking the appropriate box on the display. All of these research tools are conventional and commercially available (via web-based links and the like).

FIG. 18 shows one possible user interface for selecting transaction engines to be made available to group members. As shown in FIG. 18, many different types of transaction engines can be provided to group members, including electronic data interchange (EDI) ordering; online catalog ordering; various types of auctions; sealed bids; bid and proposal tools; two-party negotiated contracts; brain writing (moderated online discussion) and online Delphi (collaborative estimation of a numerical parameter). The following describes various types of transaction engines in more detail. Enhanced features (i.e., those that differ from conventional products) are highlighted in gray text.

### A. Order placement (online catalog) transaction engine

An order placement or online catalog engine allows the buyer to place an order for a quantity of items at a stated fixed price, essentially ordering from an online catalog. The catalog contains the description and specification of the offerings. The catalog may be publicly accessible (Subtype 1 a) or provided for a specific customer (Subtype 1b). Prices are included in the catalog but may be customer specific, may vary with quantity purchased, terms of delivery and performance (e.g. cheaper if not required immediately). The catalog can represent a single company's offering or an aggregate of the offerings from several companies. The catalog can range from a sales-oriented web site designed for viewing by customers, to a engine designed only accept orders sent via electronic data interchange (EDI). Note that the catalog can be shopper oriented (i.e. designed to sell) or a simple, machine-readable list of available items and prices. The following describes in more detail steps that can be executed to create an online catalog:

### 1. Enter and maintain a framework for catalog

1.1. Enter / delete / edit categories. Categories are titles for groups of items, such as "furniture" or "solvents"
1.2. Enter / delete / edit subcategories. Subcategories are categories within categories, effectively establishing a hierarchy of products. Example: furniture/dining room/tables.
1.3. Create groups of categories and subcategories (e.g. "see also...."). The grouping allows a person browsing items to be referred to another category that may contains items of interest. For example, someone may reach the furniture/dining room/tables and then be referred to furniture/office/conference room tables where other suitable tables may be listed, or to furniture/dining room/chairs to buy chairs that make the table. This cross-referencing transforms the hierarchical arrangement of categories into a web.

### 2. Enter / edit / delete items in catalog by entering and updating the information listed below. The system allows users to enter this information and provides basic quality assurance.

2.1. Catalog item number
2.2. Supplier part number(s)
2.3. Name of item
2.4. Description
2.5. Photos and drawings
2.6. Specifications (depends on item type). Different items have different specifications. For example, a computer printer can have color vs. black and white, dots per inch resolution, paper size, etc. In contrast to a fixed, hard coded catalog, the specification section of the general purpose catalog engine the user prepares the specification section by selecting parameters from a list and then specifying a value for that parameter. The parameter list contains values such as length, width, height, voltage, color, resolution etc. It is can be extended by the manager of the auction environment. A lister selects a necessary parameter (e.g. length, then enter the value, such as 14"). The specification section is a concatenation of individual specifications.
2.7. First available date
2.8. Last available date
2.9. Category (categories) into which the item fits
2.10. Alternate suggestion(s) if product not available
2.11. Related and associated products (e.g. printer supplies for a printer or other household items with the same pattern.
2.12. Additional information at the option of the individual or organization listing the item.

### 3. Enter / update pricing information

3.1. Simple price. The fixed prices is per item or per unit. The price must specify the
3.2. Pricing algorithm -- link to code for pricing algorithm

### 4. Take Orders

There are two variants: 4a: manual purchase in which a person browses a catalog and selects and item for purchase and 4b: automated order in which a purchase is initiated by an electronic message.

### Variant 4a: Manual Purchase

4.1. Potential buyers access the catalog by drilling down through the category / subcategory tree or
4.2. Buyers search fields in catalog to identify the appropriate item. The search may examine the title, description, or any of the specification fields.
4.3. Display general information for item(s) meetings specifications
4.4. Allow user to modify search or to select specific item if the items displayed to do not meet his requirements
4.5. Display detailed information for selected item
4.6. Display the fixed price or calculate price if prices is based on an algorithm. The pricing algorithm may include parameter such as characteristics or affiliation of the users (e.g. affiliated with a pre-negotiated discount program), delivery date and mode, and quantity.
4.7. Offer the option to purchase or search again if they choose not to purchase.
4.8. If the buyer opts to proceed with the purchase, then check the availability of the item by linking to the sellers inventory system
   4.8.1. If the item is available then execute an 'add to basket'. That is, place it on a list of items designated for purchase.
   4.8.2. If the item is not available, then execute the contingent response:
      4.8.2.1. Offer delivery at predicted date
      4.8.2.2. Terminate the sale, but offer to deliver or notify when next the item is next available.
      4.8.2.3. Suggest alternate items
      4.8.2.4. Report `sorry' and abort transaction
4.9. Offer option to purchase addition options
   4.9.1. If offer is accepted, execute from step 4.1
   4.9.2. If offer is not accepted, proceed with step 4.10
4.10. Conclude the transaction
   4.10.1. Collect shipping information, offer options
   4.10.2. Collect payment information
   4.10.3. Validate payment
   4.10.4. Summarize order
   4.10.5. Obtain final authorization
   4.10.6. Generate receipt

### Variant 4b: automated order, done using an EDI (electronic data interchange) message

### 4.1 Accept requests for item

### 4.2 Return price and confirmation of availability

Note that users may conduct transactions without employing EDI. It is possible, however, for members to agree on a transaction EDI format either by completing a template within the system or selecting a pre-established EDI format from a library. This library can include formats developed by recognized standards organizations (e.g. UNEDIFACT or ANSI) or formats developed specifically for an industry or a trading environment. Once there is agreement on a format, transactions can be initiated, concluded, and confirmed through the exchange of appropriate EDI messages. As many commercial ordering, accounts payable, accounts receivable and enterprise resource planning systems have an EDI interface the collaborative environment should have the capability to forward the message to the order fulfillment system.

### B. English Auction Transaction Engine

In an English Auction, a single item is offered for sale to many buyers. The auction can be open or limited to pre-qualified bidders. The buyers offer bids in turn, each succeeding all prior bids. The highest bid received at any point in the auction is visible to all buyers. The identity of the highest bidder may or may not be visible to traders. Buyers may increase their bids in response to this information. Award is to the highest bidder at the end of trading. The end of trading is reached when there are no higher bids during an interval that may be formally defined or determined by the manager of the auction at the time of execution.

There are two models for the access to the transactions. In the first model, all buyers and sellers are members of the group. In the second model, all sellers are members of the group, but buyers can include members and non-members. If non-members are allowed to buy, the creator the transaction must enter a new URL for buyers. This is a sub-URL of the main group URL. A registration process may be established for the buyer URL.

In live auctions (as opposed to online) all traders are connected at the same time, and the duration of the auction is brief- typically only a few minutes. In online trading, it is not necessary for all of the bidders to be present (i.e. connected at the same time). To distinguish between these two options they are designated (a) concurrent (everyone bidding at the same time) and (b) batch (not everyone connected simultaneously. The manager of the auction can set the minimum bid and the minimum increment.
1. The first step in conducting an auction is to collect information on the items being offered for sale. This is done online. The information collected includes:
   1.1. Identity of seller. Note that the business rules of the auction may require advance registration of sellers to verify their identity.
   1.2. Descriptions, optionally including attachments and photographs, independent certifications or appraisals, and anything else in digital form necessary or useful in determining the value of the item.
   1.3. Reserve price
   1.4. Minimum increment
   1.5. Time offered for sale
   1.6. Time bidding is scheduled to end
   1.7. Verify the seller's consent to the rules of the auction house regarding delivery, payment, responsibility for non payment, etc.
2. If the business rule of the auction house is to require payment up front, collect payment either by:
   2.1. Debiting a deposit account
   2.2. Charging to account for billing
   2.3. Collecting online payment such as through a credit card.
3. Post information about auction, including:
   3.1. Description of items to be auction
   3.2. Auctions rules:
      3.2.1. Qualification process for bidders
      3.2.2. Time of bidding
      3.2.3. Criterion for ending bidding - time between bids
      3.2.4. Legal statement - responsibilities of buyer and seller, limitation of liability
4. Execute qualification process (optional)
   4.1. Admit bidders who are qualified based on past participation
   4.2. Provide fill-in-the blank qualification form new bidders
   4.3. Collect information
   4.4. Conduct automated review or manual review
   4.5. Inform prospective bidder of qualification or not

### Variant (a): concurrent auction

5. Conduct Auction
   5.1. Fifteen minutes prior to appointed time for auction, display "Welcome" screen with space for qualified bidder to enter an alias or handle to be used in the auction. Screen should have a description of the object. Show time until auction starts. Auto refresh at 15 second intervals.
   5.2. At appointed time, display the main auction page with the following information:
      5.2.I. Description / picture of item for auction stored in a separate, static frame of the PC so that it does not need to be downloaded each cycle.
      5.2.2. Current bid (initially the reserve price)
      5.2.3. Suggested next bid (e.g. current + 3 * increment)
      5.2.4. Button to accept suggested next bid
      5.2.5. Field to enter bid higher than suggested next
      5.2.6. Handle of the highest bidder
   5.3. Refresh main auction page at 15 second intervals
   5.4. Collect bids, either
      5.4.1. Notice that the suggested bid was accepted
      5.4.2. Bid higher than accepted bid
      5.4.3. If new bid is lower than current highest, disgard
      5.4.4. If higher than current highest then
         5.4.4.1. Log identity of highest bidder
         5.4.4.2. Update highest bid
         5.4.4.3. Update next suggested bid
6. If nobody accepts the suggested bid, then
   6.1. Reduce suggested next bid
   6.2. If accepted, resume normal sequence
   6.3. If not accepted, reduce suggested next bid
   6.4. If accepted, resume normal sequence
   6.5. If not, begin close
   6.6. "Going once ...", if response, resume normal sequence, else
   6.7. "Going twice ..." if response, resume normal sequence, else
   6.8. Done. Display closing screen
7. Settle with winning bidder, two models
   7.1. Connect buyer to seller for direct settlement
   7.2. Collect money from buyer, deduct fee, convey amount to seller

### Variant (b): batch (i.e. time limited) auction

Conventional on-line batch (time limited) auctions are common. E-bay is the most prominent example. This process description continues from step 4 of the English auction description as the startup of the concurrent and batch auctions are the same.
5. Conduct auction: Until closing time for an item:
   5.1. On entry to system display the following for the potential buyer:
      5.1.1. Latest listing
      5.1.2. Categories
      5.1.3. Search screen
   5.2. On selection of categories:
      5.2.1. Execute dill down.
      5.2.2. Retrieve count of items that meet criteria
      5.2.3. If more count is less than 25 (or other small number (n) consistent with the layout of the screen) retrieve all items that meet criterion
      5.2.4. If count is more than n, retrieve n auctions with nearest expiration time
      5.2.5. Display link list to all items in list, sort order should be auction with nearest deadline to most distant
         5.2.5.1. Item name
         5.2.5.2. Time till end of auction
         5.2.5.3. Highest current bid
      5.2.6. On user selection of the item, display same information as above plus
         5.2.6.1. Description
         5.2.6.2. Photo (if any)
         5.2.6.3. Attachments (if any)
      5.2.7. If count is more than n, display further drill-down options as well as item information above
   5.3. Accept new bid through the display screen
      5.3.1. Log bids in order, reject if bid is not higher than last high bid by increment.
      5.3.2. If bid is rejected, tell bidder that their bid is not sufficient
      5.3.3. Update database recording highest bid, bidder, time of bid
      5.3.4. Display screen to user to confirm that their bid is the highest
6. When the time limit is reached, determine if a new bid has been received in the last 3 minutes (or other short time period). If so, extent the bidding time by 3 minutes (or other short time period) and execute step 5 with a new closing time.
7. When the time limit is reached, including all extensions under step 6, then
   7.1. Email message to highest bidder that they won
   7.2. Add transaction to completed deals
   7.3. Update splash and add screens
   7.4. Settle with winning bidder-- two models:
      7.4.1. Connect buyer to seller for direct settlement
      7.4.2. Collect money from buyer, deduct fee, convey amount to seller

### C. Dutch Auction Transaction Engine

A Dutch auction, like a standard auction, involves the sale of a single item or batch with fixed specifications. There is one seller, and many potential buyers. The seller sets the prices, ideally higher than any buyer's maximum bid price. The offered price is reduced by a fixed increment at fixed intervals until a buyer accepts the price. The purchase goes to the first buyer in to accept the price. In the physical world (as opposed to the online world), Dutch auctions are rarely if ever run concurrently. In a live trading room, it could be difficult to determine which buyers was first to commit to a price when several are willing to pay the same amount. The Dutch auction is relatively simple to implement in an electronic environment. There are, at present, no online Ducth Auctions of which the inventors are aware.
1. Enter and maintain a framework for catalog
   1.1. Enter / delete / edit categories. Categories are titles for groups of items, such as "furniture" or "solvents"
   1.2. Enter / delete / edit subcategories. Subcategories are categories within categories, effectively establishing a hierarchy of products. Example: furniture/dining room/tables.
   1.3. Create groups of categories and subcategories (e.g. see also....). The grouping allows a person browsing items to be referred to another category that may contains items of interest. For example, someone may reach the furniture/dining room/tables and then be referred to furniture/office/conference room tables where other suitable tables may be listed, or to furniture/dining room/chairs to buy chairs that make the table. This cross referencing makes transforms the hierarchical arrangement of categories into a web.
2. Execute qualification process (optional)
   2.1. Admit bidders who are qualified based on past participation
   2.2. Provide fill-in-the blank qualification form new bidders
   2.3. Collect information
   2.4. Conduct automated review or manual review
   2.5. Inform prospective bidder of qualification or not
3. Collect information on items to be auctioned and owners, including
   3.1. Identity of seller
   3.2. Descriptions, optionally including attachments and photographs, independent certifications or appraisals, or other information necessary to establish the value of the tiem
   3.3. Categorization
   3.4. Starting price
   3.5. Increment, Interval for reduction
   3.6. Minimum price
   3.7. Obtain consent to rules (possibly as part of registration/qualification process)
   3.8. Collect to conduct auction if item is
   3.9. Calculate time to take item off auction by determining the number of steps (intervals) necessary to reduce price from the starting price to the minimum
   3.10. Record all of the above information in the Dutch auction database
4. Cull expired options
   4.1. Search database periodically for items where current time is later than time to take item off auction (2.9)
   4.2. Inform owner that item was not sold
   4.3. Delete entry from database
   4.4. Prompt for revised terms start of another auction, create new entry if user takes option
5. When the buyer enters the system display a list of high level categories, a prompt for search criteria, and/or a link to a search page. Allow user to drill down through categories or enter search parameters.
   5.1. Retrieve count of items that meet criteria
   5.2. If more count is less than 25 (or other small number (n) consistent with the layout of the screen) retrieve all items that meet criterion
   5.3. If count is more than n, retrieve n auctions with nearest expiration time
   5.4. Display link list to all items in list, sort order should be auction with nearest deadline to most distant
      5.4.1. Item name
      5.4.2. Time till end of auction
      5.4.3. Current price:
         5.4.3.1. Retrieve starting price (SP) and increment (I$)
         5.4.3.2. Calculate number of intervals since start of auction (INT)
         5.4.3.3. Determine price = SP - (INT * $)
   5.5. On click, display same information as above plus
   5.6. Description
   5.7. Photo (if any)
   5.8. Attachments (if any)
   5.9. The display screen should include a button that allows the buyer to purchase the item at the selected price.
6. When the user clicks the "buy" button
   6.1. Email message to highest bidder that they won
   6.2. Add transaction to completed deals database
   6.3. Settle with winning bidder-- two models:
      6.3.1. Connect buyer to seller for direct settlement
      6.3.2. Collect money from buyer, deduct fee if any for auction and payment services, convey the remainder to seller.

### D. Reverse English Auction Transaction Engine

In a reverse auction, there are multiple buyers to one seller. Prices come down rather than up. There are many variants of a reverse auction. The variant discussed here is a reverse English auction. Reverse auctions have been implemented on line in Open Markets.

The process for posting an item for bid and for qualifying bidders is the same as for other auctions. The difference here is that the buyer may optionally set a maximum price.
1. Accessing the list of items sought
   Potential bidders access items sought by working through a hierarchy of categories and subcategories or entering search criteria, as for other auctions. A list of items within the category/subcategory and/or meeting the search criteria is displayed. The user may then
   1.1. Terminate the session on finding no suitable items
   1.2. Revise the search criteria
   1.3. Select an item on which to bid
2. If the user selects an item on which that may wish to bid, detailed information about the items is displayed. This item may include the following information:
   2.1. Name
   2.2. Seller
   2.3. Description
   2.4. Detailed specifications for items
   2.5. Delivery requirements
   2.6. Proposed terms
   2.7. Current low bid
3. If the user determines that they should bid, he accesses the bid entry screen from the detailed description in Step 2 above. Making a bid consists of entering the following information:
   3.1. New, lower bid
   3.2. Comments pertaining to any special terms, features, or conditions
   3.3. Attachments containing relevant additional information and any certifications required by the buyer
4. On receipt of bid, there are two options - either all bids are accepted, or bids are accepted only after review of information by the buyer.
   4.1. Case 1: all bids are accepted
      4.I.1. New bid is checked to determine if it is lower than prior bid
      4.1.2. If so, then
         4.1.2.1. bidder is notified that their bid is currently the lowest
         4.I .2.2. seller is notified of new low bid
         4.I .2.3. bid database is updated
      4.1.3. If not, then
         4.1.3.1. Bidder is notified that their bid is not the lowest
         4.1.3.2. Bid screen is displayed so that bidder may lower bid
   4.2. Case 2: bids are accepted after review by buyer
      4.2.1. Buyer is notified of bid via email or online message
      4.2.2. Buyer accesses complete information on the proposed bid through the system
      4.2.3. Buyer select accept bid or reject bid.
      4.2.4. If bid is accepted, then
         4.2.4.1. Bidder is notified that their bid is currently the lowest
         4.2.4.2. Bid database is updated
      4.2.5. If bid is not accepted, then
         4.2.5.1. Buyer enters reason for not accepting bid
         4.2.5.2. Bidder is informed that bid is rejected with reason stated above
         4.2.5.3. Bidder may access the bid screen to revise offer
5. When time period has expired and there have been no bids within a short specified interval, then
   5.1. If at least one bid less than the maximum has been received, then:
      5.1.1. Notify low bidder that their offer was successful
      5.1.2. Add transaction to completed deals database
      5.1.3. Settle with winning bidder-- two models:
         5.1.3.1. Connect or introduce buyer to seller for direct settlement
         5.1.3.2. Collect money from buyer, deduct fee if any for auction and payment services, and convey the remainder to seller.
   5.2. If no bid less than the maximum has been received, the
      5.2.1. Notify buyer
      5.2.2. Allow buyer to revise bid criteria

### E. Sealed Bid Transaction Engine

In a sealed bid system, the buyer publishes or distributes detailed, fixed specification to a number of potential bidders (who may or may not be prequalified). Bidders submit binding bids by a specified deadline, in a specific format that allows ready comparison. The competitive bidding process is distinguished from the bid and proposal process by the complexity of the specifications and the bids. In a simple competitive bid, competition among the bidders is along one or two readily quantified dimensions (always including price) and there is little or no room for variation in the form or specifications of the offering. Comparison of the bids is elementary.

The process for posting an item for bid and for qualifying bidders is the same as for other transactions as is the method to identify items on which to bid either using the hierarchy of categories and subcategories or a search engine.
1. If the user selects an item on which he may wish to bid, detailed information about the items is displayed. This item may include the following information:
   1.1. Name
   1.2. Seller
   1.3. Description
   1.4. Detailed specifications for items including all information necessary to prepare a bid
   1.5. Bid instruction including specification for any documentation the buyer may required with a bid (e.g. proof of bonding or license)
   1.6. Notice of any fees for bid registration
   1.7. Delivery requirements
   1.8. Proposed terms
2. After review of the bid requirements, the user may choose not to bid or may enter a bid. The process for entering a bid consists of preparing a bid package, including the price offered and any necessary supporting documentation. This is done by completing an online form, with provision for attachments. The bid is submitted through the system where it goes into a database of bids that are not opened to the closing time for the bidding process.
3. At the closing time, all bid packages are conveyed to the buyer.
   3.1. If there are no bids, the buyer is offered the opportunity to revise the request for bids.
   3.2. If there are multiple bids, the buyer reviews the bids and selects the lowest priced qualifying bid. They buyer informs the seller and arranges payment and delivery in accord with the terms stated in the bid package.

### F. Order Matching Transaction Engine

In an order-matching system there are many potential buyers. Each posts binding offer to buy (bid amount) or sell (asked amount). The process proceeds in real time. The order matching system constantly compares bid and asked and, when a match is found within a specified spread, the deal is concluded. No accepted offer can be repudiated, but offers may be withdrawn before a deal is consummated. The strike price is posted so that buyers and sellers can modify their offerings in real time. The items traded are fungible so that price is the only decision. For the market to operate efficiently the items traded must be tightly defined and the terms of sale must be fixed and determined in advance. This is typically done by the operation or an exchange, with the order-matching engine operating in the background. To insure that the items traded are well defined, and the terms of sale are rigid example of an order matching process in stock trading on an exchange.

Users of an order-matching engine are all potential buyers and seller. They are qualified in advance using a process like that outlined by for auction with the extension that deposit accounts are frequently required given the speed of transactions in exchange environments.
1. Establish and maintain items to be traded. All functions in this category are reserved to the manager of the exchange or a designee.
   To add (i.e. "list" and idem), enter
   1.1. Unique item number or symbol
   1.2. Description of item (e.g. Sears Class A Common Stock)
   1.3. Terms and conditions ownership (e.g. who can own) if any
   1.4. Trading units (e.g. shares, blocks, etc.)
   1.5. Additional information as required by the rules of the exchange
   To delete (i.e. "delist" and item)
   1.6. Select the item to be deleted
   1.7. Confirm deletion
2. On entry to the system, potential buyers and sellers can review the price of the last transaction of any item, either through a list or a search by item name or symbol. The current highest asked and lowest bid price are also shown.
3. An offer to sell is posted by entering the following information:
   3.1. Item number or symbol
   3.2. Quantity offered
   3.3. Proposed price ("asked")
   3.4. Seller
   3.5. Offers may be revise at any time prior to consummation of a deal
4. An offer to buy is posted by entering the following information
   4.1. Item number or symbol
   4.2. Quantity offered
   4.3. Proposed price ("asked")
   4.4. Buyer
   4.5. Offers may be revised at any time prior to consummation of a deal
5. Offers to buy and sell are constantly reviewed by the software. When there is an offer to buy and sell at a price within a preset difference. When prices match, buyers and sellers are notified of the transaction, and the transaction is recorded. The display of the last transaction price, the highest bid and the lowest asked price is updated.
6. The transaction is conveyed to the backend accounting system of the exchange.

### G. Bid and Proposal

The bid and proposal process is typically used for procurement of large or complex products or services, in which cost is not the only factor. Cost must be weighed against the buyer's assessment of the quality and suitability of an offering and the ability of the bidder to deliver the product or perform the specified services.

The bid and proposal process is conducted between one buyer (possibly representing a consortium) and many potential sellers, sometimes organized into teams. The buyer issues specifications that may be general or highly specific, brief or very lengthy. The specifications may be distributed freely or to a list of qualified buyers.

With physical RFPs, the size and the associated cost of distribution make it common practice to advertise the availability of the RFP first, sending copies only to those that request it. Frequently, the requestors are required to supply information to establish their qualifications to bid. While cost is not an issue in electronic dissemination of RFPs, the model of advertising prior to distribution is still useful in managing the qualification process. This is addressed as variant (a) is this description. Variant (b) requires no prequalification.

In a competitive bid on fixed requirements (sealed bid or auction), there is typically very little communication between buyer and seller between publication of the request and submission of the bids. The requirements are comparatively simple, clear, and unambiguous. In contrast, the bid and proposal process may involve considerable communication between buyer and seller. The process may begin with a bidders' conference to answer questions about the requirements. Additional questions from bidders may be accepted, though not all need be answered. Questions and answers may be made available to all bidders or the response may be in private. This dialog is crucial for two reasons. First, it helps the bidders understand the requirements and to be responsive in their bids. Second, it is not unusual for the bidders' questions to identify some point of ambiguity, error, or contradiction in the specifications, leading to a modification of the RFP. The diverse perspectives of the bidders, and the close attention required on their part to prepare a bid inherently provides an excellent review of the RFP.

The initial phase of the RFP process concludes with submission of the bids, but this is far from the conclusion of the process. Commonly, questions arise from the review of the proposals. These may relate to a specific submission or have broader implications, leading to modification of the requirements. The list of bidders can be culled to the best candidates. These are asked to answer questions about their proposals and to provide additional and clarifying information.

The process described here is built around the document repository described elsewhere in this application. Through this process of refinement, the list of bidders is narrowed to one or two with whom a contract is negotiated. The process of negotiation is addressed as a separate transaction type (Negotiation Engine) as it may be conducted without the bid and proposal process.

### Variant (A): with pre-qualification

1. Software supports the user in creating a web site for the proposal process. Initially this site manages the process for requesting the request for proposal (RFP), qualifying bidders, and disseminating the RFP.
2. Supported by the system software, the bidder creates and RFP advertisement by
   2.1. entering a summary of the RFP.
   2.2. entering a summary of the information needed to qualify as a bidder or
   2.3. attaching a form (HTML web page or template for paper form) for entering qualifying information
3. The RFP advertisement includes file transfer software for uploading qualifying information to the repository.
4. Disseminate RFP advertising
   4.1. Post on public bulletin board or
   4.2. Disseminate via mail to selected users
5. When users access the system, issue them an encryption key and PIN to be used for subsequent uploads and communications to verify their identity.
6. Receive requests for RFP in repository
   6.1. Prompt for key
   6.2. Encrypt submission
   6.3. Upload
   6.4. Generate receipt - should include an authentication number
7. Disseminate RFP to selected user, either:
   7.1. Attach to return Email or
   7.2. Post the RFP in a repository from which qualified prospective bidders may download the file. If the repository model is used, provide notice of the posting via email including any necessary PINs and codes to access the repository
   7.3. When a prospective bidder downloads an RFP, issue an encryption key to be used in submitting proposal
8. The RFP site also includes a page through which prospective bidders can submit questions. Questions and answers are posted to the site.
9. Updates to the schedule and amendments to the RFP are posted to the site
10. All access to the site is recorded to verify that prospective bidders have received critical information. Direct contact may be used when it is determined that a bidder had not accesses the site since critical new information was posted.
11. Bidders prepare their proposal and then upload them to a repository for proposals using software built into the proposal site.
   11.1. Prompt for key
   11.2. Encrypt submission
   11.3. Upload
   11.4. Generate secure hash number to prevent tampering with the submission
   11.5. Generate receipt including secure hash number and authentication code
12. After initial proposals are received, the process moves into a phase commonly termed the "best and final process" in which the proposals are reviewed, the list narrowed, and the proposals refined.
   12.1. Create separate secure environment (i.e. web site with repository) for each respondent
   12.2. Exchange materials through repository (described elsewhere in this filing)
   12.3. Records and receipt each access
   12.4. Generate key for revised proposal
   12.5. Receive proposal using process in 11
   12.6. Repeat from step 11 as many times as necessary
The remainder of the process is completed as a negotiated deal, described below.

### Variant B: no pre-qualification :

Proceed as above, beginning with Step 6 and not requiring a key for download of the RFP.

### H. Negotiation Deal Engine

An engine for negotiating a deal can be built around the capability of the system to create a temporary virtual private network through the web. A temporary network is created for the negotiation. Access to the network is limited to the parties of the negotiation, their advisors and counsel, and, potentially, arbitrators and regulators. The members of the negotiating environment have access to the complete set of tools described in this filing including those for communications (email, anonymous mail, online chat, threaded dialogs, and audio and video collaboration), the library of standard contract instruments, the tools for document signature and authentication, and the document repository. Using these tools in a secure environment they can negotiate, close, and register a deal.

FIG. 19 shows one possible user interface for selecting participation engines to be made available to group members. The term "participation engine" refers generally to collaboration tools that provide features beyond merely communicating among group members. Various services such as an on-line survey tool, a DELPHI model tool; brain writing tool; and real-time polling can be provided.

### A. Online Survey

In online polling or surveying, the person creating the poll uses and automated tool (new to this application) to build simultaneously an online questionnaire and a database to collect the results. The user builds the questionnaire by entering a series of questions and an associated data collection widget for each.

The polling tool builds the database and the data entry screen. The data entry screen consists of two columns. The left column is a series of questions. The right column is the data entry tool appropriate to the question. Various data entry tools can be provided to respond to the query, including such things as:
1. yes / no radio buttons
2. true / false radio buttons
3. slider with scale from 1-5, 1-10, etc.
4. fill-in-the-blank text box
5. numeric field
6. multiple check boxes (e.g. strongly disagree, disagree, agree, strongly agree)
Other data entry types may be added.

As each question / data collection widget is added, the polling tool creates the database. The database includes one record per data collection form. Creating the database structure simply means adding one new field to each record definition for each question. The type of data collection widget defines the format of the field, as follows:
1. yes / no radio buttons: one character field, limited to "y" or "n"
2. true / false radio buttons: one character field, limited to "y" or "n"
3. slider: real number field, with appropriate range check
4. fill-in-the-blank text box: text box
5. numeric field: real number or integer
6. multiple check boxes: integer field with range check from I to number of boxes
Every data entry screen provides a "save" and "cancel" button. Save writes to the database. Cancel exits the entry screen without saving.

The survey, once composed as described above exists as a web page. This page can be embedded in web applications. It can be made available on a site available to the entire Internet, on an Intranet, or in a dynamically created environment. Alternatively, it can be distributed via e-mail. When the form is completed, the submit button transmits the value entered to the database that is created at the time the form is generated. Access to the database is controlled by the rules of the database system. It may be limited to the individual who creates the survey form and database, but it may be accessible other users in the survey developers organization, as determined by the database administrator. Distribution of the result of the analysis is at the discretion and control of the individual managing the survey. This manager may be the individual who creates the survey, but the actual creator may be acting on behalf of the survey manager. Results may be kept private, posted to the Internet, and intranet, or a collaborative environment, distributed via e-mail within an organization, or, if the information is available, sent via e-mail to the participants in the survey.

### B. Online Delphi Engine

The online Delphi engine allows real-time collaboration in estimating or predicting an outcome that can be expressed numerically. For example, the method can be used to develop a consensus forecast of grain prices. The method has been in used since the 1970s, but has not previously been adapted to online processes. One possible method is as follows:
1. Establish the session
   1.1. Within an online community, the moderator of the session creates the brain writing session by entering the following information:
      1.1.1. Name of moderator
      1.1.2. Title of the session
      1.1.3. Description of the session
      1.1.4. Background reading as references or attachments
      1.1.5. Start date for the session
      1.1.6. Scheduled end for the session
      1.1.7. Access to the session:
         1.1.7.1. URL for access
         1.1.7.2. Open to all or invitees only for observation
         1.1.7.3. Open to all or invitees only for participation
      1.1.8. Payment information if required
2. Optionally, the session may be advertised on line
3. If the session is private, invitations with logon keys must be distributed via email, actual mail, or download.
4. Optionally, the moderator may run on online applications and qualification process
5. Prior to the start of the session, the moderator must describe precisely the value to be estimated. The definition must be completely unambiguous.
6. Each participant connects at the start of the session. On connecting they question is posed (e.g. "What will be the price of West Texas intermediate oil in December?")
7. Each participant enters a number a brief (1 paragraph maximum) explanation of their reasoning.
8. When the participant is done entering their estimate, they click "Done".
9. Each participant's estimate and explanation is recorded.
10. Each participant then sees the summary screen.
11. Estimates are arrayed graphically from top to bottom of the screen, from lowest to highest. The value is stated as is the associated comment, but the source of the comment is not revealed.
12. Participants can review the estimates and comments, send an anonymous message to the author or any comment, or amend their answers.
13. The session terminates when the time expires, or when the moderator determines that there it is no longer appropriate to continue. The operator may determine this is based on declining participation or, if participation is high, the moderator may extend the deadline.
14. Participants and observers may access the final display of estimates, again arrayed from top to bottom, lowest to highest.

### C. Brain Writing

Brain writing is a variant of a method for facilitated group discussion termed brainstorming. The objective of brainstorming is to maintain the focus of the discussion while encouraging creative input and recognizing the contributions of all members of the group. It seeks to avoid problems with a few individuals dominating the discussion, with junior staff deferring to senior staff, and with new ideas being abandoned before than can be developed fully. Brain storming has been commonly used since the late 1960s. Brain writing is a more intense method that relies on joint writing rather than discussion. What is presented here is adaptation of that method to an online environment. It is believed to be the first such adaptation.
1. Establish the session
   1.1. Within an online community, the moderator of the session creates the brain writing session by entering the following information:
      1. 1. 1. Name of moderator
      1.1.2. Title of the session
      1.1.3. Description of the session
      1.1.4. Background reading as references or attachments
      1.1.5. Start date for the session
      1.1.6. Scheduled end for the session
      1.1.7. Access to the session:
         1.1.7.1. URL for access
         1.1.7.2. Open to all or invitees only for observation
         1.1.7.3. Open to all or invitees only for participation
      1.1.8. Payment information if required
2. Optionally, the session may be advertised on line
3. If the session is private, invitations with logon keys must be distributed via email, actual mail, or download.
4. Optionally, the moderator may run on online applications and qualification process
5. Prior to the start of the session, the moderator must list some number (typically 5-10) of questions or hypotheses to be explored. (e.g. " Our company should create a spinoff to develop and commercialize the new breast cancer vaccine") This may be done by the moderator alone, in consultation with the participants, or with other outside the session.
6. Each question or hypothesis becomes a "Card".
7. Participants may enter the session any time after the start. A password may be required if the session is not open.
8. On entry into the system, a user if given a card at random. The card consists of the initial question or hypothesis plus all comments entered on the card by other participants.
9. After reviewing the card, the participant may add his or her own comments to the bottom. After entering comments, the participant clicks "Done" to return the card to the pile.
10. When a participant returns a card to the pile, they received another card, chosen at random (preferably) or selected by the user. This process continues until the opt to exit. They may reenter at any time up to the conclusion of the session.
11. When a card is returned to the pile, it is become available for assignment to the next participant. The card includes the additions of the most recent participant.
12. A participant may opt to return the card without addition if he or she has nothing to add.
13. Participants may create new cards when new ideas come to mind. These are treated in exactly the same way as original cards.
14. Observers may view any card but may not add to them.
15. The moderator may limit participation to a set number at any time so that there is a sufficient number of cards to keep the participants fully occupied.
16. The session terminates when the time expires, or when the moderator determines that there it is no longer appropriate to continue. The operator can determine this based on declining participation or, if participation is high, the moderator may extend the deadline.
17. The raw cards are distributed at the conclusion to all participants. The moderator or another individual is charged preparing a summary and arranging follow-up.

FIG. 22 shows one possible scheme for storing brain card writing data elements. In accordance with one embodiment, each brain writing card comprises a data structure including the following elements:
1. Brain writing session number: Serially assigned number to differentiate brainwriting sessions. A session is the set of all cards pertaining to a particular topic.
2. Card number: A Serially assigned sequence number
3. Initial Comment : The question or comment used to initiate the discussion (e.g. "SAIC should purchase a company that produces Internet server software"
4. Date and time card started
5. Date and time card closed
6. Comments: A collection (i.e. a set of unlimited length) containing the comments added by participants in the brainwriting session.
7. Date of additional comment: Date and time that each additional comment was added.
8. Commenter: Name or user ID of the person adding each additional comment. Ideally, brainwriting should be anonymous to encourage open dialog. Accordingly, this field may be omitted from an implementation. Some organizations, however, may wish to track this information without making it visible to users, or in some cases to attribute comments.

When the user has finished defining the group and specifying its functions, environment generator 1201 a (FIG. 12) creates an environment accessible to the group members and including the functions specified during the environment definition process. As shown in FIG. 20A, for example, a web page can be created for the newly created environment, including those functions that were selected by the user that created the group. All group members are notified of the existence and location of the environment, and each group member can use the functions provided in the environment to collaborate on a project or conduct business.

FIG. 20B shows what an environment might look like to a group member after entering the environment. As shown in FIG. 20B, for example, a news banner announces the latest news for the group. Additionally, specific communication tools, research tools, transaction engines, and participation engines are made available to group members, which can be executed by appropriate mouse clicks in accordance with the inventive principles. According to various inventive principles, each tool shown on the web page is accessible through a hyperlink to a web-based program that performs predefined functions as set forth above. For example, clicking on "online catalog" would link the group member to a web page that implements an online ordering engine as described previously. Users can navigate through the various tools using conventional web browser features (i.e., forward, backward, etc.). It may be desirable to implement some or all of such software using server-side scripting or other similar means consistent with the system configuration of FIG. 12.

FIG. 21 shows how environment generator 1201a can create multiple environments including virtual private facilities, which can be implemented through web pages that contain hyperlinks to functions available to members of each group or environment. An environment definition software component 2106 implements steps 1101 through 1103 of FIG. 11 in order to create one or more environments 2107. (In one embodiment, each group can also be provided with a copy of an environment generator 2106 in order to create sub-groups that draw on the applications and directory structure created for the group). As a user identifies group members and selects functions to be provided for the environment in which the group will collaborate, environment definition component 2106 stores information relating to the selected members and functions in databases. Each environment can include a web page (not shown in FIG. 21) and directories, tools and other applications specific for each created group.

Based on user selections of the type illustrated in FIGS. 13 through 19, environment generator 2106 creates an environment 2107 containing one or more web pages with links to the selected tools. Environment generator 2106 retrieves information from various information sources including a directory of communication tools 2101 (e.g., including descriptions of tools and URL/IP addresses of web applications to set up each communication tool); directory of transaction engines 2102 (e.g., including descriptions of transaction engines and the URL/IP addresses of web-based applications to set up each transaction engine); directory of research tools 2103 (similar to above); list of global data objects 2104 (e.g., a dictionary of data elements from which the directory of each group can be composed); and a directory of applications 2105 (e.g., a description of available applications and URL/IP addresses of pages to set up access to applications).

## Claims

1. A method of negotiating a deal over a network of computers, the network including at least one or more computers connected to the Internet, the method comprising the steps of:
(1) posting, on an electronic list that can be viewed over the Internet, information regarding one or more offers to form a contract;
(2) posting on the electronic list one or more responses to the one or more offers;
(3) researching the one or more responses to determine whether they satisfy one or more contract criteria;
(4) negotiating over the network between at least two parties to accept or modify one or more of the responses; and
(5) electronically signing a document to consummate the contract.

2. The method of claim 1, wherein step (1) comprises the step of displaying offers and responses in a parent-daughter spatial relationship on a computer display.

3. The method of claim 1, further comprising the step of sorting the one or more offers and one or more responses according to a user-selected sort order.

4. The method of claim 1, wherein steps (1) and (2) are done anonymously, such that each party to the contract cannot determine the identity of the other party to the contract.

5. The method of claim 4, further comprising the step of simultaneous revealing the identity of each party prior to step (5).

6. The method of claim 4, wherein steps (1) and (4) comprise the step of sharing a single anonymous e-mail alias among a plurality of users.

7. The method of claim 1, further comprising the steps of:
(6) registering keywords with an electronic agent that monitors the one or more offers and providing an e-mail address to be notified upon a keyword match; and
(7) in response to the electronic agent detecting the keyword match, transmitting a message to the e-mail address provided in step (6).

8. The method of claim 1, wherein step (2) comprises the step of clicking on a hyperlink linking the information posted in step (1) to a reply card.

9. The method of claim 7, wherein step (2) comprises the step of requiring the submission of certain information before the reply card will be accepted.

10. The method of claim 1, wherein steps (3) and (4) are performed a plurality of times for a single contract, such that modifications are made to the one or more responses.

11. The method of claim 1, further comprising the step of electronically registering a plurality of entities that have signatory authority and con-elating the registered entities with one or more documents to which signatures can be affixed.

12. A computer system implementing a method of negotiating a deal over a network of computers, the network including at least one or more computers connected to the Internet, said system comprising :
(1) posting means, on an electronic list that can be viewed over the Internet, for posting information regarding one or more offers to form a contract;
(2) posting means on the electronic list for posting one or more responses to the one or more offers;
(3) researching means for researching the one or more responses to determine whether they satisfy one or more contract criteria;
(4) negotiating means for negotiating over the network between at least two parties to accept or modify one or more of the responses; and
(5) electronically means for signing a document to consummate the contract.

13. The system of claim 12, wherein posting means comprise means for providing the step of displaying offers and responses in a parent-daughter spatial relationship on a computer display.

14. The system of claim 12, wherein posting means further comprise sorting means for sorting the one or more offers and one or more responses according to a user-selected sort order.

15. The system of claim 12, wherein it further comprises dissimulating means in order that the functioning of posting means (1) and (2) are done anonymously, such that each party to the contract cannot determine the identity of the other party to the contract.

16. The system of claim 15, further comprising means for revealing simultaneously the identity of each party prior to signing.

17. The system of claim 15, wherein it further comprises means for sharing a single anonymous e-mail alias among a plurality of users while posting information regarding one or more offers to form a contract and while negotiating.

18. The system of claim 12, further comprising :
(6) registering means for registering keywords with an electronic agent that monitors the one or more offers and providing an e-mail address to be notified upon a keyword match; and
(7) means for, in response to the electronic agent detecting the keyword match, transmitting a message to the e-mail address provided by registering means (6).

19. The system of claim 12, wherein posting means (2) comprises means for clicking on a hyperlink linking the information posted with posting means (1) to a reply card.

20. The system of claim 18, wherein posting means (2) comprises means for requiring the submission of certain information before the reply card will be accepted.

21. The system of claim 12, wherein researching means (3) and negotiating means (4) comprise means for performing a plurality of times for a single contract, such that modifications are made to the one or more responses.

22. The system of claim 12, further comprising electronically registering means for registering a plurality of entities that have signatory authority and correlating the registered entities with one or more documents to which signatures can be affixed.
